(19) **Europäisches Patentamt**
**European Patent Office**
**Office européen des brevets**

(11) **EP 0 853 370 A1**

(12) **EUROPEAN PATENT APPLICATION**

(43) Date of publication:
**15.07.1998 Bulletin 1998/29**

(51) Int. Cl.⁶: **H02K 9/02, H02K 9/04**

(21) Application number: **97122336.7**

(22) Date of filing: **17.12.1997**

(84) Designated Contracting States:
**AT BE CH DE DK ES FI FR GB GR IE IT LI LU MC NL PT SE**
Designated Extension States:
**AL LT LV MK RO SI**

(30) Priority: **18.12.1996 JP 338548/96**

(71) Applicant:
**MITSUBISHI DENKı KABUSHIKı KAISHA Tokyo 100 (JP)**

(72) Inventors:
• **Umemoto, Toshiyuki**
  **Chiyoda-ku, Tokyo 100 (JP)**
• **Oshima, Takeharu**
  **Chiyoda-ku, Tokyo 100 (JP)**
• **Kotoh, Satoru**
  **Chiyoda-ku, Tokyo 100 (JP)**
• **Takai, Yasuro**
  **Chiyoda-ku, Tokyo 100 (JP)**
• **Koga, Kiyonori**
  **Chiyoda-ku, Tokyo 100 (JP)**
• **Yamauchi, Hidehito**
  **2-chome, Chiyoda-ku, Tokyo 100 (JP)**

(74) Representative:
**Sajda, Wolf E., Dipl.-Phys. et al
MEISSNER, BOLTE & PARTNER
Widenmayerstrasse 48
80538 München (DE)**

(54) **Rotating electric device**

(57) A rotary electric device comprises projections (4D) disposed downstream of each of a suction opening of a stator cooling duct (22). These downstream disposed projections (4D) reach into the air gap (2) and directing the cooling gas into the suction openings. Further upstream disposed projections (104F) of blow-out openings (103) of the rotor cooling duct (12) and the stator cooling duct (22) facing the air gap are also given. The upstream disposed projections (104F) directing the blow-out cooling gas into the air gap (2) and act like as baffles for the air in the air gap (2) of this electrical machine. With this aerodynamical structure, the suction and the blow-out flow of the cooling gas increases thereby improving the cooling effect of the whole machine.

FIG. 12A

FIG. 39

FIG. 61

FIG. 59

## Description

### BACKGROUND OF THE INVENTION

#### 1. Field of the Invention

The present invention relates to a rotating electric device having a ventilating mechanism that cools a rotor and a stator of a turbine generator, etc., by a cooling gas.

#### 2. Description of the Related Art

There has been generally known a rotating electric device such as a turbine generator which is equipped with a cooling duct in a rotor and a stator so that a cooling gas such as an air which is a cooling medium gets circulated in the cooling duct to cool the rotating electric device.

As a rotor cooling system, there has been widely used a direct cooling system in which a rotor coil is brought in direct contact with the cooling gas to cool the rotating electric device.

Hereinafter, various representative examples of the rotor cooling systems will be described.

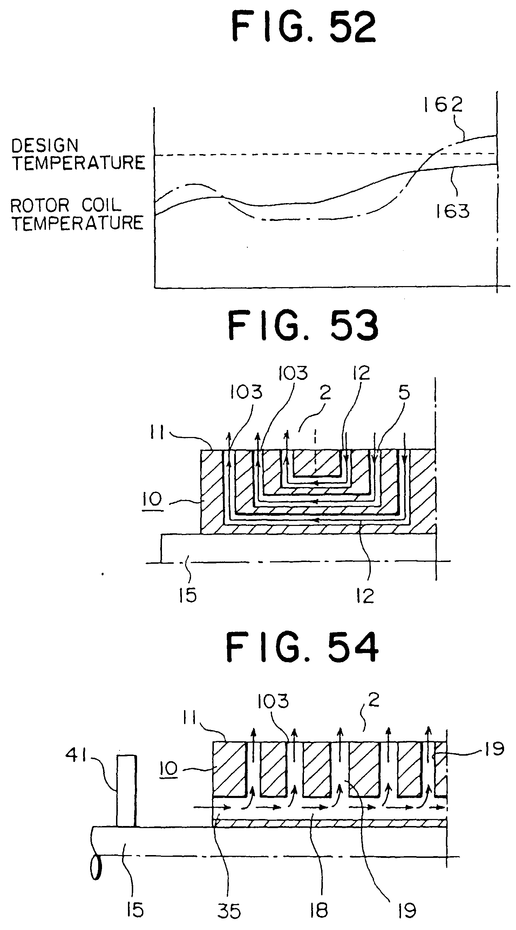

Fig. 53 is a vertical cross-sectional view schematically showing the structure of an upper portion of a generator rotor of a gap pickup cooling system. This turbine generator is so designed that, upon the rotation of a rotor 10 with the rotation of a rotor shaft 15, a cooling gas that flows circumferentially relatively with respect to the rotor 10 gets guided from a suction opening 5 to a rotor cooling dust 12 to cool a rotor coil (not shown), and is thereafter exhausted from a blow-out opening.

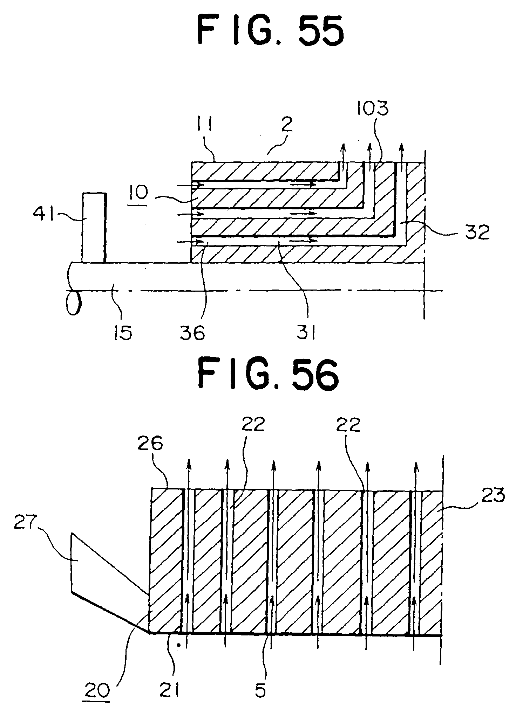

Fig. 54 is a vertical cross-sectional view schematically showing the structure of an upper portion of a generator rotor of a radial flow cooling system. In this turbine generator, there is equipped a sub-slot 18, which is a ventilation flue extending along an axis of a rotor 10, on a bottom portion of a coil slot (not shown). The sub-slot 18 communicates with a plurality of radial buses 19 which are ventilation flues extending over the overall length of the rotor 10 along a radial direction of the rotor 10. Due to a forcing action of an axial flow fan 41 which is attached onto an end portion of a rotor shaft 15 and a pumping action which is caused by a centrifugal force produced within the radial buses 19 by the rotation of the rotor 10, a cooling gas is led from a sub-slot inlet portion 35 into the sub-slot 18 within the rotor 10. A cooling gas led into the sub-slot 18 is sequentially branched to the respective radial buses 19 while flowing toward the center of the rotor 10. The cooling gas that has cooled the rotor coil in the respective radial buses 19 is exhausted toward an air gap 2 from a blow-out opening 103 formed in an outer peripheral surface 11 of the rotor 10.

Fig. 55 is a vertical cross-sectional view schematically showing the structure of an upper portion of a generator rotor of an interior cooling system. In this turbine generator, there are equipped a plurality of rotor cooling ducts 31 that extend axially within a rotor coil. Due to a forcing action of an axial flow fan 41 which is attached onto a rotor shaft 15 and a pumping action which is caused by a centrifugal force produced within a plurality of rotor cooling ducts 31 that extend radially due to the rotation of the rotor 10, a cooling gas is led from corresponding inlet portions 36 of the respective rotor cooling ducts 31 into those rotor cooling ducts 31 of the rotor 10. After the cooling gas led into the respective cooling ducts 31 has cooled the rotor coil while flowing toward the center of the rotor 10, it is led into the respective ducts 32 in the vicinity of the center of the rotor 10, and then exhausted toward an air gap 2 from a blow-out opening 103 formed in an outer peripheral surface 11 of the rotor 10.

On the other hand, as stator cooling mechanisms which are disposed outside of the rotor 10 through the air gap 2, there are a radially outward ventilating system, a radially inward ventilating system, and a complex ventilating system that combines the above two systems.

Hereinafter, the respective stator cooling structures will be described. The representative stator coil cooling system is an indirect cooling system that cools a stator coil from an outside of a main insulating material with which the stator coil is covered.

Fig. 56 is a vertical cross-sectional view schematically showing the structure of an upper portion of a stator of the radially outward ventilating system. A stator 20 is made up of a stator core 23 consisting of laminated thin steel plates and a stator coil (not shown), and the stator core 23 is axially divided into a plurality of sections by a plurality of stator cooling ducts 22 that extend radially.

In the above radially outward ventilating system, a cooling gas is introduced from the respective suction openings 5 formed in an inner peripheral surface 21 of the stator 20 into the stator cooling ducts 22 to cool the stator coil and the stator core 23, and is then exhausted from an outer peripheral surface 26 of the stator 20.

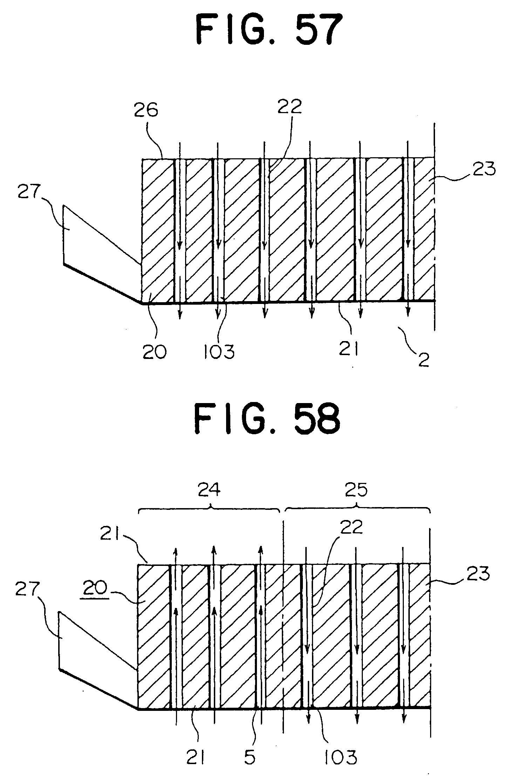

Fig. 57 is a vertical cross-sectional view schematically showing the structure of an upper portion of a stator of the radially inward ventilating system. A stator 20 is structured in the same manner as that of the radially outward ventilating system shown in Fig. 56. A cooling gas is introduced from an outer peripheral surface 26 of the stator 20 into a plurality of stator cooling ducts 22 to cool the stator coil and the stator core 23, and is then exhausted from a plurality of blow-out openings 103 formed in an inner peripheral surface 21 of the stator 20 into an air gap 2.

Fig. 58 is a vertical cross-sectional view schematically showing the structure of an upper portion of a stator of the complex ventilating system. A stator 20 is sectioned into an air exhaust zone 24 and an air suction zone 25. The air exhaust zone 24 is of the ventilating system which is structured in the same manner as the radially outward ventilating system shown in Fig. 56, whereas the air suction zone 25 is of the ventilating system which is structured in the same manner as that of the radially inward ventilating system shown in Fig. 57.

A mechanism of ventilation cooling of the entire rotary electric device is made up of the combination of the above-mentioned ventilating systems. Hereinafter, examples of such ventilation cooling mechanisms will be described.

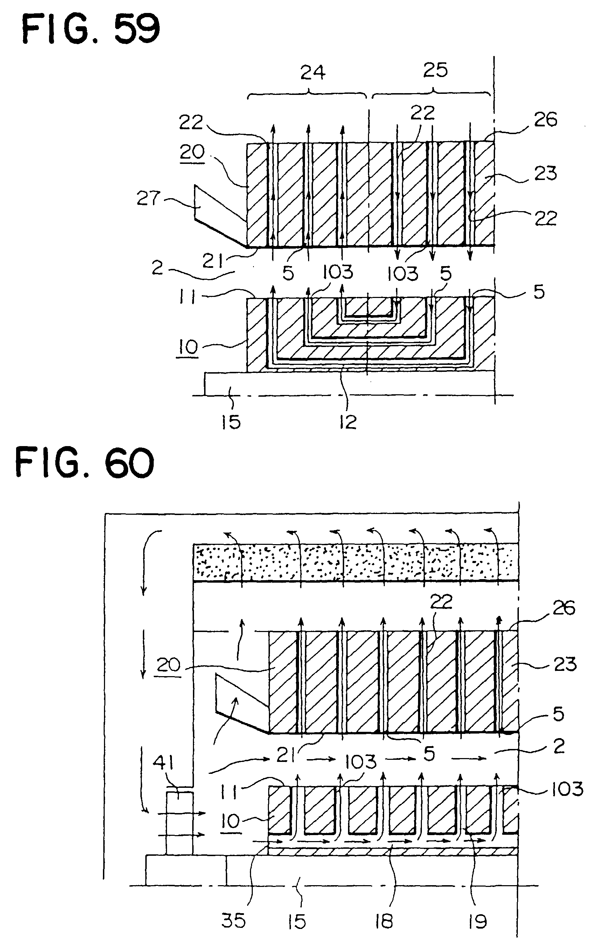

Fig. 59 is a vertical cross-sectional view schematically showing the structure of a ventilating system that combines the gap pickup cooling system shown in Fig. 53 with the complex ventilating system shown in Fig. 58. A cooling gas is introduced from an outer peripheral surface 26 of a stator 20 of the air suction zone 25 into a plurality of stator cooling ducts 22, and then exhausted from a plurality of blow-out openings 103 formed in an inner peripheral surface 21 of the stator 20 into an air gap 2. The cooling gas exhausted in the air gap 2 is given a swing velocity due to the rotation of the rotor 10, and then led from a plurality of suction openings 5 formed in an outer peripheral surface 11 of the rotor 10 into a rotor cooling duct 12 of the rotor 10. The cooling gas that has flown within the rotor cooling dust 12 is exhausted toward the air gap 2 from a plurality of blow-out openings 103 formed in the outer peripheral surface 11 of the rotor after cooling the rotor coil. The exhausted cooling gas is led from the suction openings 5 formed in the inner peripheral surface 21 of the stator of the air exhaustion zone 24 into the stator cooling dusts 22, and exhausted from the outer peripheral surface 26 of the stator 20 after cooling the stator 20.

Fig. 60 is a vertical cross-sectional view schematically showing the structure of a cooling system that combines the radial flow cooling system shown in Fig. 54 with the radially outward ventilating system shown in Fig. 56. A cooling gas is led from a sub-slot inlet portion 35 formed on an end portion of a rotor 10 into a sub-slot 18 within the rotor 10, and then exhausted toward an air gap 2 from a plurality of blow-out openings 103 formed in the outer peripheral surface 11 of the rotor after cooling a rotor coil in respective radial buses 19. The exhausted cooling gas is allowed to flow in a plurality of stator cooling ducts 22 within a stator 20 from corresponding suction openings 5 formed in an inner peripheral surface 21 of the stator while a rotating velocity component of the cooling gas is decelerated within the air gap 2.

Also, a part of the cooling gas that passed through an axial flow fan 41 is allowed to flow directly into the air gap 2, and is given a rotating velocity by the rotation of the rotor 10. Then, the part of the cooling gas flows along a rotor shaft 15 within the air gap 2 while rotating, and is allowed to flow into the stator cooling ducts 22 from the suction openings 5 formed in the inner peripheral surface 21 of the stator while being sequentially branched. The cooling gas that has flown in the stator cooling duct 22 is exhausted from an outer peripheral surface 26 of the stator after cooling the stator coil and a stator core 23.

In the above-mentioned respective ventilation cooling systems of the rotary electric devices, it is important that during running of the rotary electric device, the rotor coil, the stator coil and the stator core 23 are uniformly cooled to a given temperature or less along the axial direction, and also that no high-temperature portion (hot spot) is locally generated. In the case where the high-temperature portion is locally generated in the rotor 10, the rotor shaft 15 of the rotor 10 is dislocated due to heat deformation, which may lead to a case where the rotor shaft 15 is finally damaged. Also, in the case where the high-temperature portion is locally generated in the stator 20, an insulating performance deteriorates, and dielectric breakdown occurs.

Therefore, in order to keep the whole of the rotor 10 and the stator 20 at a given temperature or less, and the high temperature portion is prevented from locally occurring, there is required that the flow amount of the cooling gas that flows into the respective cooling ducts 12, 31, 32 and 22 is appropriately distributed.

Also, it is necessary to control a cooling gas flow within the air gap 2 formed between the outer peripheral surface 11 of the rotor and the inner peripheral surface 21 of the stator, which largely influences the distribution of the flow amount of the cooling gas along the axial direction of the rotor 10 and the stator 20. For that reason, the suction openings 5 and the blow-out openings 103 of the respective cooling ducts 12, 31, 32 and 22 which are defined in the outer peripheral surface 11 of the rotor or the inner peripheral surface 21 of the stator are variously devised so as to control the flow amount of the cooling gas that flows into or out of the cooling ducts 12, 31, 32 and 22.

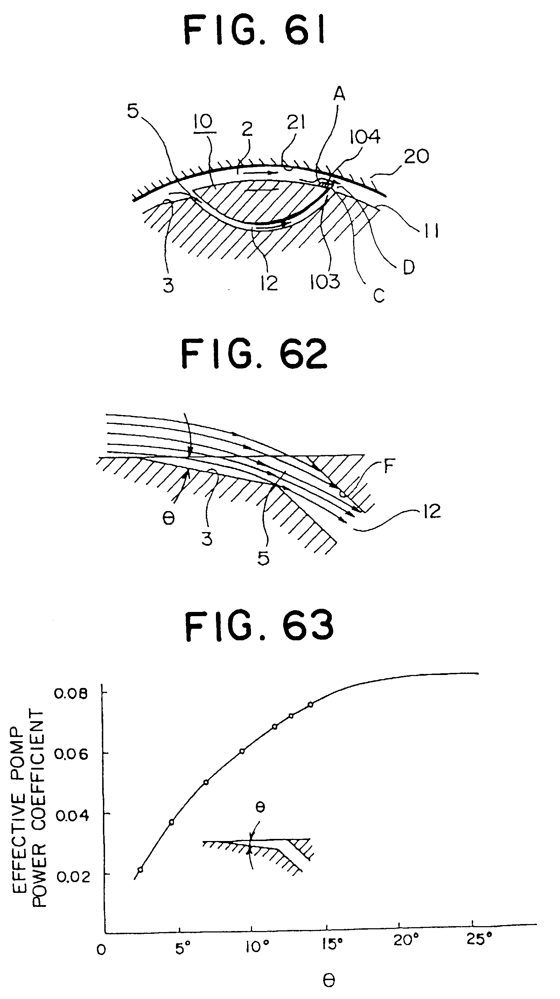

Hereinafter, an example of the prior art that controls the flow amount of a cooling gas will be described. Fig. 61 shows a ventilation cooling mechanism which is disclosed in Japanese Patent Laid Open No. 55-9906.

In this example, a tapered slope surface 3 which has a constant width and enlarges a cross section of a flow path is formed in the vicinity of a suction opening 5 within an air gap 2 upstream of the cooling gas flow. On the other hand, a projection 104 which is a parallelogram in cross section is attached onto an outer peripheral surface 11 of the rotor in the vicinity of a blow-out opening 103 upstream of the cooling gas flow within the air gap 2.

In the rotary electric device of this type, the rotation of the rotor 10 makes a relative flow of the cooling gas with respect to the rotor 10 occur within the air gap 2. The cooling gas is led from the suction opening 5 into the rotor 10 through the slope surface 3. After the cooling gas flows in the rotor cooling duct 12 to cool the rotor 10, it is exhausted toward the air gap 2 through the blow-out opening 103 that utilizes a negative pressure in a dead air region D which is caused on the back of the projection 104.

The cooling gas that flows on a top face of the slope surface 3 collides with an inner wall surface portion F of the suction opening after flowing substantially along the slope surface 3 as shown in Fig. 62. The cooling gas whose static pressure rises in the vicinity of the inner wall surface portion F flows into the rotor cooling duct 12. A difference in pressure between the outlet and the inlet of the rotor cooling duct 12 for obtaining a sufficient ventilating amount in the cooling duct 12 cannot be obtained only by the rising amount of the static pressure of the suction opening 5 due to the slope surface 3.

Therefore, in this example, the flow amount of the cooling gas that flows in the rotor cooling duct 12 depends on a pressure difference between the outlet and inlet of the rotor cooling duct 12, which combines the rising amount of the static pressure which is caused by allowing the cooling gas to collide with the inner wall surface F on the suction opening 5, with a falling amount of the static pressure in the dead air region D that is, a break-away region, which is caused on the back of the projection 104 at the blow-out opening 103.

By the way, the rising of the static pressure on the inner wall surface F of the suction opening depends on a deflection angle of an air flow along the outer peripheral surface 11 of the rotor on the slope surface 3. Therefore, in the gap pickup cooling system, in order to correct nonuniformity of a temperature of the rotor 10, a slope angle of the tapered slope surface 3 of the suction opening 5 is changed, as shown in Fig. 62, to increase or decrease the suction amount of the cooling gas in accordance with a characteristic graph shown in Fig. 63 (the axis of ordinate is an effective pump power coefficient (pressure coefficient x flow amount coefficient), and the axis of abscissa is a slope angle θ of a flow path section-enlarged portion 3), or to change the configuration of the upstream slope surface A or the downstream end surface C of the projection 104 in the vicinity of the blow-out opening 103 so that the flow amount of the cooling gas at the respective positions of the rotor 10 is appropriately adjusted, thereby keeping the temperature uniform over the entire rotor 10.

In recent years, as generators have become more compact and the axial length of the rotor 10 has been increased, the heating of the rotor 10 and the stator 20 has been increased. As a result, in order to prevent the temperature of the rotor 10 and the stator 20 from rising, it is important to control the flow amount of cooling gas.

In the above-mentioned generator, in order to increase the flow of cooling gas being sucked by the suction opening 5, it is necessary to increase the slope angle θ of the slope surface 3. However, there is a limit of the effect obtained by increasing the slope angle θ, and a remarkable increase of the flow amount cannot be hoped. In other words, as the angle θ is increased, a flow of cooling gas is separated on the slope surface 3 so that the cooling gas flow is not deflected along the slope surface 3, thereby leading to such a problem that a dynamic pressure having a cooling gas flow within the air gap 2 cannot be utilized for the sucking action.

Also, in the conventional example, in order to increase the blow-out flow amount in the blow-out opening 103, the dead air region D, that is, a break-away region, which is caused on the back of the projection 104, is enlarged by increasing the size of the projection 104 or changing the size thereof. However, these methods lead to an increase in the fluid loss of the entire ventilation cooling system such as an increase in the axial torque and an increase in the pressure loss of the cooling gas flow within the air gap 2, resulting in a problem that the efficiency of the rotary electric device deteriorates.

Also, in the case where the projection 104 is located in all the blow-out openings 103 as in the conventional example, there arises such a problem that the axial torque must be increased when the rotor 10 is intended to be maintained to a constant r.p.m.

Furthermore, in the conventional example, a direction of the upstream slope surface A and the downstream slope surface C of the projection 104 is along the vertical cross-section of the rotor shaft 15, and in the cooling gas flow within the air gap 2 where there exists a flow component along the rotor axial direction in addition to a flow component along the rotating direction of the rotor shaft 15, a direction of the gas flow is not identical with a direction along which the projection 104 is located, resulting in such a problem that an increasing action of the flow amount due to the projection 104 is small.

## SUMMARY OF THE INVENTION

The present invention has been made to solve the above-mentioned problems, and therefore a first object of the present invention is to provide a rotary electric device that improves in the suction efficiency of suction openings or the blow-out efficiency of blow-out openings.

Also, a second object of the present invention is to provide a rotary electric device that suppresses an increase of an axial torque.

Further, a third object of the present invention is to provide a rotary electric device which is uniform in the distribution of temperature within a rotor and a stator.

In order to achieve the above objects, according to the present invention, there is provided a rotary electric device, which comprises: a rotor having a rotor cooling duct into which a cooling gas flows; a stator disposed on the outer peripheral side of said rotor through an air gap and having a stator cooling duct into which the cooling gas flows; and a projection disposed downstream of at least one of a suction opening of said rotor cooling duct which faces said air gap and a suction opening of said stator cooling duct which faces said air gap along the cooling gas flow within said air gap, for directing the cooling gas flow into the suction opening.

Also, according to the present invention, the projection for the suction opening surrounds part of the suction opening.

Further, according to the present invention, the inner wall surface of the projection for the suction opening is shaped in a curved surface along a direction of the cooling gas flow.

Still further, according to the present invention, the tip portion of the projection for the suction opening, which collides with the cooling gas, is acute-angled.

Still further, according to the present invention, a slope surface that deflects the cooling gas flow toward the cooling duct side and enlarges the sectional area of a flow path of the cooling gas flow is defined on the upstream side of the suction opening.

Still further, according to the present invention, the slope surface is shaped in a curve.

Yet still further, according to the present invention, there is provided a rotary electric device, which comprises: a rotor having a rotor cooling duct into which a cooling gas flows; a stator disposed on an outer peripheral side of said rotor through an air gap and having a stator cooling duct into which the cooling gas flows; and a projection disposed upstream of at least one of a blow-out opening of said rotor cooling duct which faces said air gap and a blow-out opening of said stator cooling duct which faces said air gap along the cooling gas flow within said air gap, for directing the blow-out cooling gas flow blown out of the blow-out opening into said air gap; wherein said projection is shaped in such a manner that the corner portions of said projection are removed so that a projected area of the projection along a direction of rotating said rotor is small.

Yet still further, according to the present invention, the projection for the blow-out opening surrounds part of the blow-out opening.

Yet still further, according to the present invention, the inner wall surface of the projection for the blow-out opening is shaped in a curve along which the cooling gas flows.

Yet still further, according to the present invention, a slope surface that enlarges the sectional area of the flow path of a blow-out cooling gas flow is defined on the downstream side of the blow-out opening.

Yet still further, according to the present invention, the slope surface formed in the blow-out opening is shaped in a curve.

Yet still further, according to the present invention, the projection is so designed as to collide with the cooling gas flow at a right angle.

Yet still further, according to the present invention, a larger number of projections are disposed in a region which is estimated to be a hot spot of the rotor and in a region which is estimated to be a hot spot of the stator, in comparison with other regions.

## BRIEF DESCRIPTION OF THE DRAWINGS

The above and other objects, features and advantages of the present invention will become more apparent from the following detailed description when taken in conjunction with the accompanying drawings wherein:

Fig. 1 is a perspective view showing a rotary electric device part ofwhich is removed, according to a first embodiment of the present invention;

Fig. 2A is a perspective view showing a portion in vicinity of a suction opening of a cooling gas flow in the rotary electric device according to the first embodiment of the present invention, Fig. 2B is a vertical cross-sectional view of Fig. 2A; and Fig. 2C is a plan view of Fig. 2A;

Fig. 3 is a graph showing a flow velocity distribution of the cooling gas flow within an air gap;

Fig. 4 is a graph showing a relation between a height of a projection in the rotary electric device and the suction flow amount of the cooling gas flow according to the first embodiment of the present invention;

Fig. 5A is a perspective view showing a portion in the vicinity of a suction opening of a cooling gas flow in a rotary electric device according to a second embodiment of the present invention, Fig. 5B is a vertical cross-sectional view of Fig. 5A, and Fig. 5C is a plan view of Fig. 5A;

Fig. 6 is a graph showing a relation between a height of an opening portion of a projection and the suction flow amount of the cooling gas flow in the rotary electric device according to the second embodiment of the present invention;

Fig. 7A is a perspective view showing a portion in the vicinity of a suction opening of a cooling gas flow in a rotary electric device according to a third embodiment of the present invention, and Fig. 7B is a vertical cross-sectional view of Fig. 7A;

Fig. 8A is a perspective view showing a portion in the vicinity of a suction opening of a cooling gas flow in a rotary electric device according to a fourth embodiment of the present invention, Fig. 8B is a vertical cross-sectional view of Fig. 8A, and Fig. 8C is a plan view of Fig. 8A;

Fig. 9A is a perspective view showing a portion in the vicinity of a suction opening of a cooling gas flow in a rotary electric device according to an example of a fifth embodiment of the present invention, Fig. 9B is a vertical cross-sectional view of Fig. 9A, and Fig. 9C is a plan view of Fig. 9A;

Fig. 10A is a perspective view showing a portion in the vicinity of a suction opening of a cooling gas flow in a rotary electric device according to another example of a fifth embodiment of the present invention, Fig. 10B is a vertical cross-sectional view of Fig. 10A, and Fig. 10C is a plan view of Fig. 10A;

Fig. 11A is a perspective view showing a portion in the vicinity of a suction opening of a cooling gas flow in a rotary electric device according to still another example of a fifth embodiment of the present invention, Fig. 11B is a vertical cross-sectional view of Fig. 11A, and Fig. 11C is a plan view of Fig. 11A;

Fig. 12A is a perspective view showing a portion in the vicinity of a suction opening of a cooling gas flow in a rotary electric device according to yet still another example of a fifth embodiment of the present invention, Fig. 12B is a vertical cross-sectional view of Fig. 12A, and Fig. 12C is a plan view of Fig. 12A;

Fig. 13A is a perspective view showing a portion in the vicinity of a suction opening of a cooling gas flow in a rotary electric device according to an example of a sixth embodiment of the present invention, Fig. 13B is a vertical cross-sectional view of Fig. 13A, and Fig. 13C is a plan view of Fig. 13A;

Fig. 14A is a perspective view showing a portion in the vicinity of a suction opening of a cooling gas flow in a rotary electric device according to another example of a sixth embodiment of the present invention, Fig. 14B is a vertical cross-sectional view of Fig. 14A, and Fig. 14C is a plan view of Fig. 14A;

Fig. 15A is a perspective view showing a portion in the vicinity of a suction opening of a cooling gas flow in a rotary electric device according to still another example of a sixth embodiment of the present invention, Fig. 15B is a vertical cross-sectional view of Fig. 15A, and Fig. 15C is a plan view of Fig. 15A;

Fig. 16A is a perspective view showing a portion in the vicinity of a suction opening of a cooling gas flow in a rotary electric device according to yet still another example of a sixth embodiment of the present invention, Fig. 16B is a vertical cross-sectional view of Fig. 16A, and Fig. 16C is a plan view of Fig. 16A;

Fig. 17 is a perspective view showing a portion in the vicinity of a blow-out opening of a rotary electric device in a conventional example;

Fig. 18 is a vertical cross-sectional view of Fig. 17;

Fig. 19 is a plan view of Fig. 17;

Fig. 20 is an explanatory diagram showing an appearance of a cooling gas flow within an air gap within the rotary electric device shown in Fig. 17;

Fig. 21 is an explanatory diagram showing an appearance of a cooling gas flow within an air gap within the rotary electric device shown in Fig. 17;

Fig. 22 is a perspective view showing a portion in the vicinity of a blow-out opening in a rotary electric device according to a seventh embodiment of the present invention;

Fig. 23 is a vertical cross-sectional view of Fig. 22;

Fig. 24 is a perspective view showing a portion in the vicinity of a blow-out opening in a rotary electric device according to an eighth embodiment of the present invention;

Fig. 25 is a perspective view showing a portion in the vicinity of a blow-out opening in a rotary electric device according to an example of a ninth embodiment of the present invention;

Fig. 26 is a vertical cross-sectional view of Fig. 25;

Fig. 27 is a perspective view showing a portion in the vicinity of a blow-out opening in a rotary electric device according to another example of a ninth embodiment of the present invention;

Fig. 28 is a vertical cross-sectional view of Fig. 27;

Fig. 29 is a perspective view showing a portion in the vicinity of a blow-out opening in a rotary electric device according to still another example of a ninth embodiment of the present invention;

Fig. 30 is a perspective view showing a portion in the vicinity of a blow-out opening in a rotary electric device according to yet still another example of a ninth embodiment of the present invention;

Fig. 31 is a vertical cross-sectional view of Fig. 30;

Fig. 32 is a perspective view showing a portion in the vicinity of a blow-out opening in a rotary electric device according to a tenth embodiment of the present invention;

Fig. 33 is a vertical cross-sectional view of Fig. 32;

Fig. 34 is a plan view of Fig. 33;

Fig. 35 is a perspective view showing a portion in the vicinity of a blow-out opening in a rotary electric device according to an example of an eleventh embodiment of the present invention;

Fig. 36 is a perspective view showing a portion in the vicinity of a blow-out opening in a rotary electric device according to another example of an eleventh embodiment of the present invention;

Fig. 37 is a perspective view showing a portion in the vicinity of a blow-out opening in a rotary electric device according to still another example of an eleventh embodiment of the present invention;

Fig. 38 is a vertical cross-sectional view of Fig. 37;

Fig. 39 is a perspective view showing a portion in the vicinity of a blow-out opening in a rotary electric device according to yet still another example of an eleventh embodiment of the present invention;

Fig. 40 is a vertical cross-sectional view of Fig. 39;

Fig. 41 is a perspective view showing a portion in the vicinity of a blow-out opening in a rotary electric device according to an example of a twelfth embodiment of the present invention;

Fig. 42 is a perspective view showing a portion in the vicinity of a blow-out opening in a rotary electric device according to another example of an twelfth embodiment of the present invention;

Fig. 43 is a perspective view showing a portion in the vicinity of a blow-out opening in a rotary electric device according to still another example of an twelfth embodiment of the present invention;

Fig. 44 is a perspective view showing a portion in the vicinity of a blow-out opening in a rotary electric device according to yet still another example of an twelfth embodiment of the present invention;

Fig. 45 is a vertical cross-sectional view of Fig. 44;

Fig. 46 is a perspective view showing a portion in the vicinity of a blow-out opening in a rotary electric device according to a twelfth embodiment of the present invention;

Fig. 47 is a vertical cross-sectional view of Fig. 46;

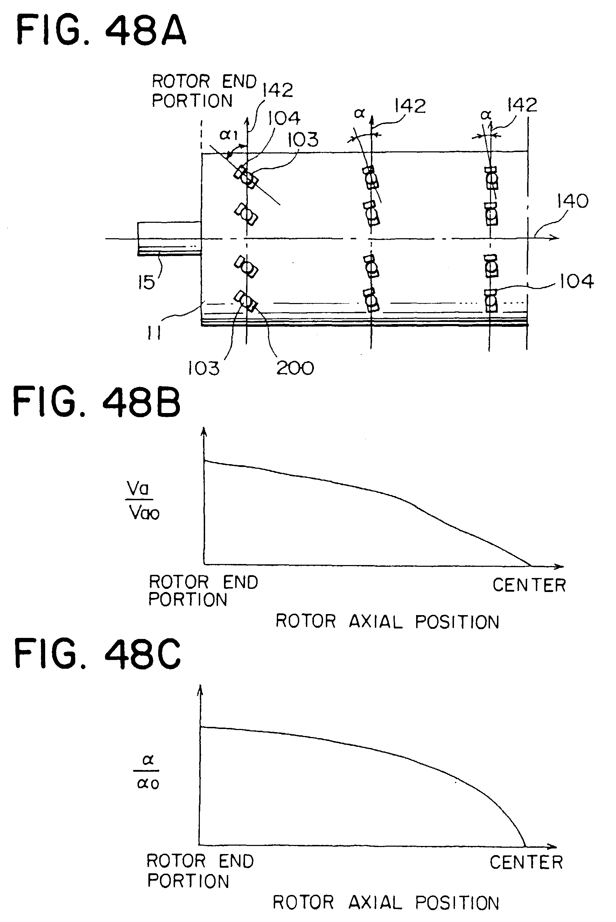

Fig. 48A is a plan view showing a rotor of a rotary electric device according to a thirteenth embodiment of the present invention; Fig. 48B is a graph showing the distribution of an axial flow velocity of a cooling gas flow within an air gap in the rotary electric device according to the thirteenth embodiment of the present invention; and Fig. 48C is a diagram showing an axial variation of an angle defined by a flow direction of a cooling gas flow within an air gap and a plane perpendicular to a rotor shaft in the rotary electric device according to the thirteenth embodiment of the present invention;

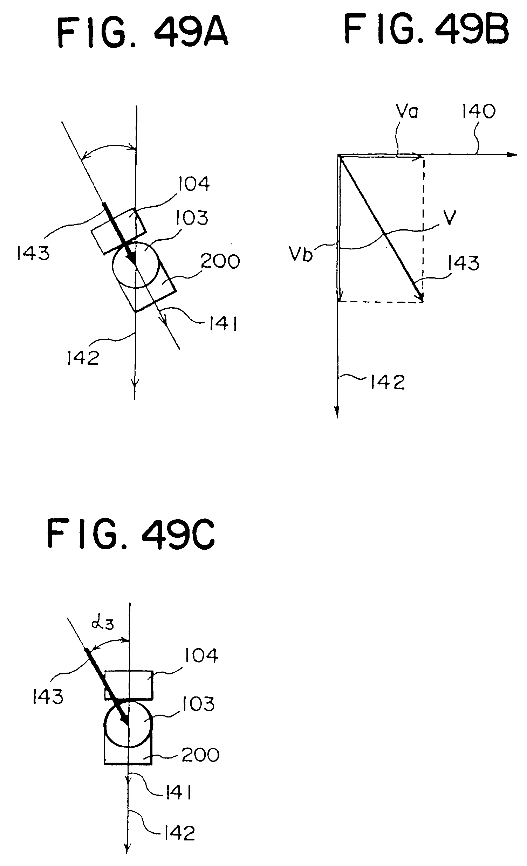

Fig. 49A is an enlarged diagram showing a portion in the vicinity of a blow-out opening shown in the rotary electric device according to the thirteenth embodiment of the present invention; Fig. 49B is a diagram for explanation of a flowing direction of the cooling gas in the vicinity of the suction opening of the cooling gas flow in the rotary electric device according to the thirteenth embodiment of the present invention; and Fig. 49C is an enlarged diagram showing a portion in the vicinity of the suction opening of the cooling gas flow in the rotary electric device according to the thirteenth embodiment of the present invention;

Fig. 50 is a graph showing a relation between an angle defined by the cooling gas flow and a direction along which a projection is located and a suction flow amount in the rotary electric device according to the thirteenth embodiment of the present invention;

Fig. 51A is a plan view showing a rotor outer peripheral surface according to a fourteenth embodiment of the present invention; and Fig. 51B is a vertical cross-sectional structural view of Fig. 51A;

Fig. 52 is a graph showing the distribution of a rotor coil temperature along a rotor axial direction in the rotary electric device according to the fourteenth embodiment of the present invention;

Fig. 53 is a vertically cross-sectional view partially showing a rotor in a conventional ventilating type rotary electric device;

Fig. 54 is a vertically cross-sectional view partially showing a rotor in another conventional ventilating type rotary electric device;

Fig. 55 is a vertically cross-sectional view partially showing a rotor in still another conventional ventilating type rotary electric device;

Fig. 56 is a vertically cross-sectional view partially showing a stator in yet still another conventional ventilating type rotary electric device;

Fig. 57 is a vertically cross-sectional view partially showing a stator in yet still another conventional ventilating type rotary electric device;

Fig. 58 is a vertically cross-sectional view partially showing a stator in yet still another conventional ventilating type rotary electric device;

Fig. 59 is a vertically cross-sectional view partially showing a rotary electric device of yet still another conventional ventilating type;

Fig. 60 is a vertically cross-sectional view partially showing a rotary electric device of yet still another conventional ventilating type;

Fig. 61 is a vertically cross-sectional view partially showing a rotary electric device of yet still another conventional ventilating type;

Fig. 62 is a vertically cross-sectional view showing a suction opening in a conventional ventilating type rotary electric device; and

Fig. 63 is a graph showing a relation between an inclined angle of a slope surface and a suction flow rate in the conventional ventilating system.

## DETAILED DESCRIPTION OF THE PREFERRED EMBODIMENTS

Now, a description will be given in more detail of preferred embodiments of the present invention with reference to the accompanying drawings.

## First Embodiment

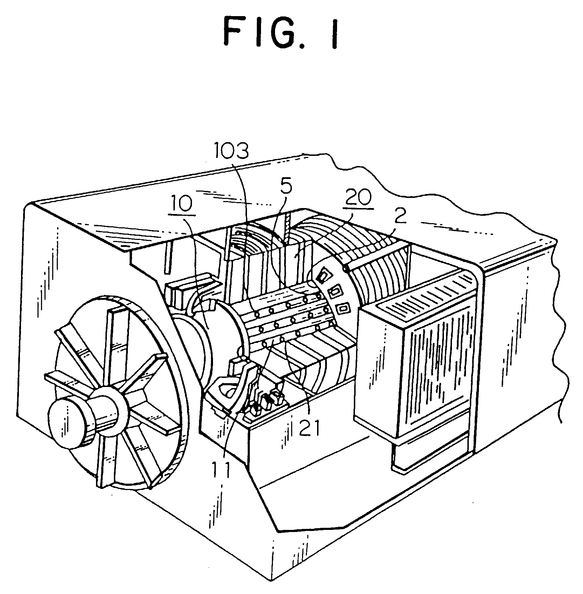

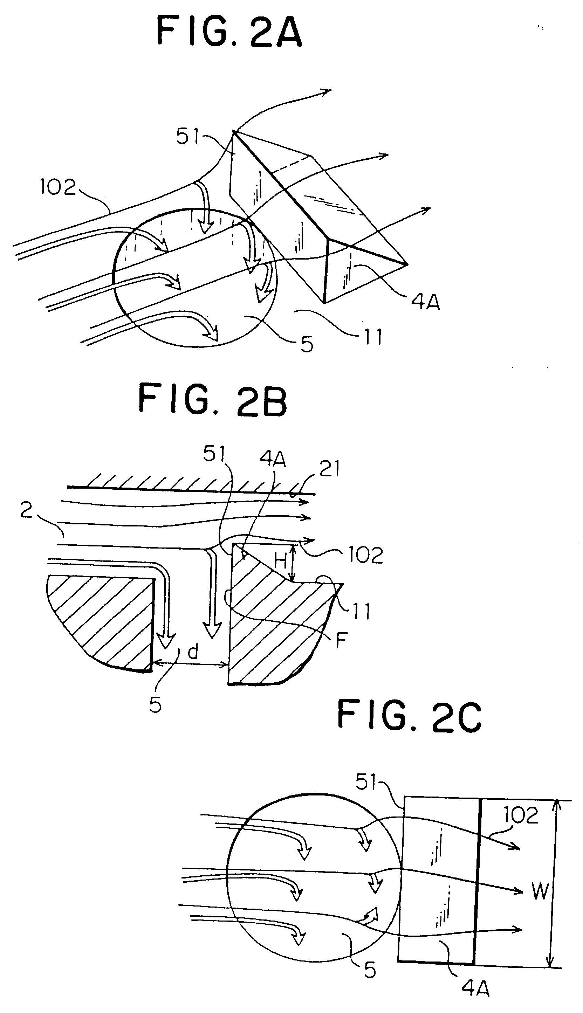

Fig. 1 is a perspective view showing a turbine generator using the gap pickup cooling system, part of which is removed, according to a first embodiment of the present invention. Fig. 2A is a perspective view showing a main portion of the turbine generator shown in Fig. 1, Fig. 2B is a vertical cross-sectional view of Fig. 2A, and Fig. 2C is a plan view of Fig. 2A.

A columnar rotor 10 is equipped into a cylindrical stator 20. A plurality of suction openings 5 and a plurality of blow-out openings 103 are defined in a rotor outer peripheral surface 11. A triangle-pole shaped projection 4A is located on the rotor 10 within an air gap 2 defined between the rotor outer peripheral surface 11 and a stator inner peripheral surface 21. The projection 4A is fixed onto the rotor 10 in such a manner that a downstream wall surface of the suction opening 5 is identical with an upstream side surface of the projection 4A (perpendicular to the rotor outer peripheral surface 11).

In this embodiment, due to a wall surface sharing force on the rotor outer peripheral surface 11 which is caused by the rotation of the rotor 11, a cooling gas having a cooling gas viscosity is accelerated along a peripheral direction of the rotor 10 within the air gap 2 to produce a cooling gas flow.

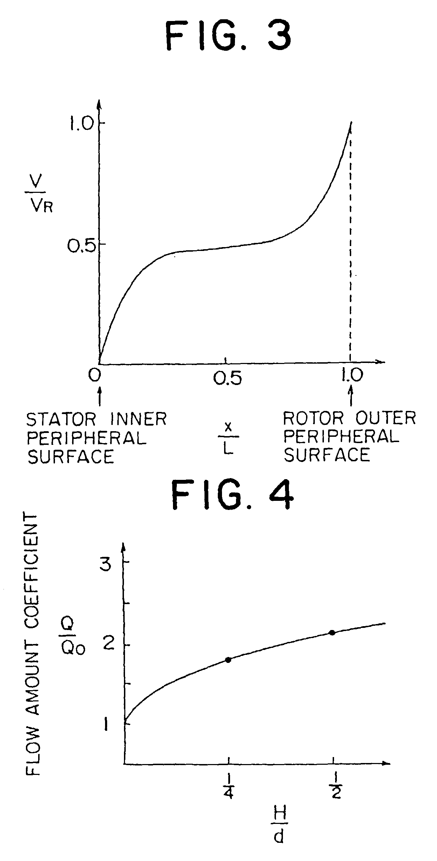

Fig. 3 is a graph showing a measured result of a velocity distribution within the air gap 2. In the figure, the axis of ordinate represents a dimensionless velocity $V/V_R$ obtained by dividing a flow velocity $\underline{V}$ of the cooling gas along the rotor peripheral direction by a peripheral velocity $V_R$ of the cooling gas along the rotor outer peripheral surface, and the axis of abscissa represents a dimensionless distance x/L obtained by dividing a distance $\underline{x}$ along a gap width within the air gap 2 by a gap width $\underline{L}$. It is found from the figure that in a region except for regions which are influenced by boundary layers in the vicinity of the rotor outer peripheral surface 11 and the stator inner peripheral surface 21, a mean flow velocity of the cooling gas flow 102 along the peripheral direction of the rotor 10 is about 1 / 2 of the rotor outer peripheral velocity.

In the turbine generator thus structured, the cooling gas flow 102 within the air gap 2 which is accelerated along the direction of rotating the rotor 10 collides with a wall surface 51 of the projection 4A which is attached downstream of the suction opening 5 along the cooling gas flow 102, to thereby flow into the suction opening 5. With the collision of the cooling gas flow 102 with the projection 4A, since a dynamic pressure of the cooling gas is converted into a static pressure so that a static pressure within an inner wall F of the suction opening on an upper portion thereof rises, the suction flow amount of the cooling gas increases.

Fig. 4 is a graph showing a relation between a height $\underline{H}$ of the wall surface 51 of the projection 4A and the suction flow amount $\underline{Q}$. In the figure, the axis of ordinate represents a flow amount coefficient which is a dimensionless flow amount $Q/Q_0$ obtained by dividing a suction flow amount $\underline{Q}$ in case of provision of the projection 4A by a suction flow amount $Q_0$ in case of provision of no projection 4A, and the axis of abscissa represents a dimensionless height H/d obtained by dividing the height $\underline{H}$ of the projection 4A by a diameter $\underline{d}$ of the suction opening 5. In this example, the width W of the projection 4A is set to be constant. A measured result is that the dimensionless flow amount $Q/Q_0$ monotonically increases with an increase of the dimensionless distance H/d. It is found from the figure that with the structure in which the projection 4A higher in level than the wall surface 51 is located downstream of the suction opening 5 along the cooling gas flow 102, the suction flow amount of the cooling gas from the suction opening 5 increases.

Subsequently, an increase of an axial torque with the location of the projection 4A will be described. In the case where the projection 4A is located on the rotor 10, if the r.p.m. of the rotor 10 is intended to be kept constant, the axial torque must be increased. However, an increase of the axial torque due to the location of the projection 4A derives from the collision of the projection 4A with the cooling gas flow 102 within the air gap 2. Therefore, an increased amount of the axial torque due to the location of the projection 4A is determined in accordance with a product of a dynamic pressure caused by a relative velocity difference between a velocity at which the cooling gas flow 102 within the air gap 2 collides with the wall surface 51 of the projection 4A and the rotating velocity of the rotor outer peripheral surface 11, and a total sum of projected areas of a plurality of projections 4A along the direction of rotating the rotor 10.

An increased amount $\Delta$ T of the axial torque due to the location of the projections 4A is determined by an expression stated below.

$$\Delta T = nSPR \qquad (1)$$

where $\underline{n}$ is the number of located projections 4A, $\underline{S}$ is a projected area of the projections 4A along the direction of rotating the rotor, $\underline{P}$ is a relative velocity differential pressure between the flow velocity of the cooling gas flow 102 within the air gap 2 and the rotor outer peripheral surface velocity, and R is a radial of the outer periphery of the rotor 10.

As is apparent from the above expression, the increased amount $\Delta$ T of the axial torque due to the location of the projection 4A when the r.p.m. of the rotor 10 is intended to be kept constant increases in proportion to the number n of the located projections 4A and the projected area $\underline{S}$ of the projections 4A along the rotor rotating direction. Hence, if the same increase ratio of the ventilation flow amount in the cooling duct is obtained, the number $\underline{n}$ of the located projections 4A is reduced, and the projected area $\underline{S}$ of the projections 4A along the rotor rotating direction is reduced, thereby being capable of reducing the increased amount $\Delta$ T of the axial torque.

Also, in the case where the wall surface 51 of the projections 4A is rectangular as shown in Fig. 2, the projected area $\underline{S}$ of the projections 4A along the rotor rotating direction is represented by the following expression.

$$S = W \times H \qquad (2)$$

Further, the dynamic pressure $\underline{P}$ which is derived from the relative velocity difference between the flow velocity of the cooling gas flow 102 within the air gap 2 and the rotor outer peripheral surface velocity is determined by the following expression, if the relative velocity difference is $V_S$ and the cooling gas density is $\underline{\rho}$,

$$P = (1/2)\rho V_S^2 \qquad (3)$$

When the running conditions of the generator which is the rotary electric device of the air cooling system are that a generating capacity is 50 MW, 60 Hz, a generating efficiency is 98.5%, a stator core length is 3 m, and a rotor diameter is 1.0 m, the axial torque $\underline{T}$ of the generator is T = 8.4 x $10^5$ Nm.

When the dimensions of the vertically projected area of the projection 4A are 5 mm in height $\underline{H}$ and 16 mm in width $\underline{W}$, if the total number n of the projections 4A which are located at the cooling duct inlets in the rotor outer peripheral surface 11 is 720, T = 35Nm is satisfied, and its occupied rate with respect to the entire axial torque $\underline{T}$ is slight.

On the other hand, in the flat type generator having no projection 4A, the axial torque $T_{\omega}$ which is derived from ventilation cooling is determined by a sum of the frictional loss of the cooling gas within the air gap 2 and the pumping action of the rotor 10.

The axial torque which is derived from the frictional loss value within the air gap 2 is 75 Nm, and the axial torque which is derived from the pumping action of the rotor 10 is 440 Nm. Therefore, the axial torque $T_{\omega}$ spent on ventilation cooling is 515Nm (75Nm + 440Nm), and the increased amount of torque $\triangle$ T (35Nm) due to location of the projections 4A is a smaller value than $T_{\omega}$ (515Nm).

Second Embodiment

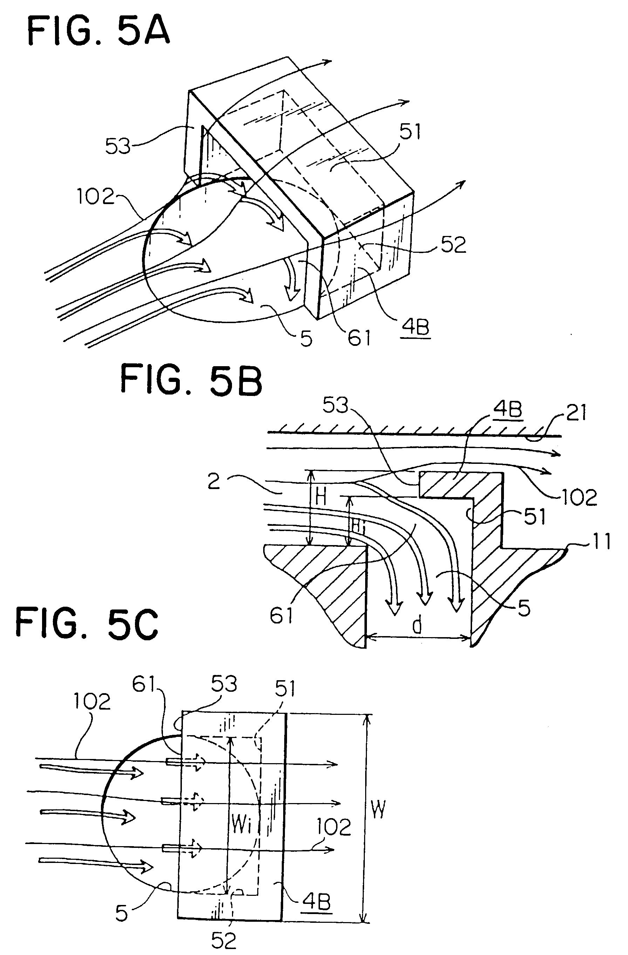

Fig. 5A is a perspective view partially showing a turbine generator according to a second embodiment of the present invention, Fig. 5B is a vertical cross-sectional view of Fig. 5A, and Fig. 5C is a plan view of Fig. 5A.

In this embodiment, a suction opening 5 is defined in a rotor outer peripheral surface 11 of the gap pickup cooling system. A projection 4B is located downstream of the suction opening 5 along a cooling gas flow 102. The projection 4B which is U-shaped in cross section is made up of a wall surface 51 and a side wall surface 52. The projection 4B surrounds part of the suction opening 5, and is formed with an opening portion 61.

The respective dimensions of the projection 4B are $\underline{H}$ in height and $\underline{W}$ in width, and the height of the opening portion 61 is Hi, and the width of the opening portion 61 is Wi.

In this embodiment, because a tip surface 53 of the projection 4B has a thickness, the height Hi of the opening portion 61 of the projection 4B is smaller than the height $\underline{H}$ of the projection 4B.

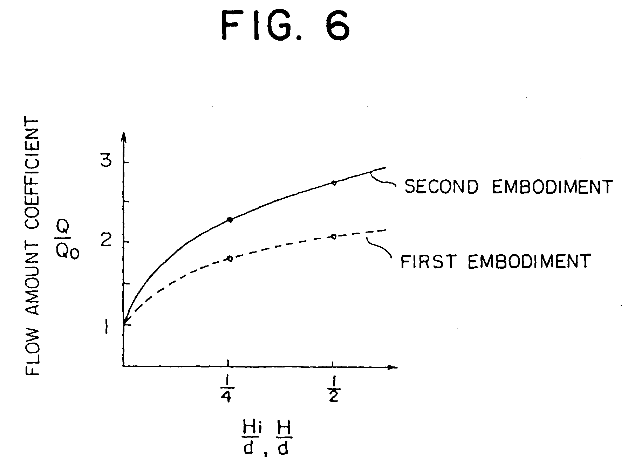

Fig. 6 is a graph showing a relation between a height Hi of the opening portion 61 and the suction flow amount $\underline{Q}$. In the figure, the axis of ordinate represents a flow amount coefficient which is a dimensionless flow amount $Q/Q_0$ obtained by dividing a suction flow amount $\underline{Q}$ in case of provision of the projection 4B by a suction flow amount $Q_0$ in case of provision of no projection 4B, and the axis of abscissa represents a dimensionless height obtained by dividing the height Hi of the opening portion 61 by a diameter $\underline{d}$ of the suction opening 5. The suction flow amount $\underline{Q}$ increases with an increase of the height Hi of the opening portion. In this figure, a graph representative of the first embodiment is shown together with a graph of the second embodiment. It is found from the figure that an increased rate of the suction flow amount of the projection 4B in the second embodiment is larger than that in the first embodiment.

In this embodiment, the cooling gas flow 102 along the rotor outer peripheral surface 11 collides with the wall surface 51, the side wall surface 52 and the tip surface 53 of the projection 4B with the result that a dynamic pressure of the cooling gas is converted into a static pressure. The static pressure of the cooling gas in the vicinity of the suction opening 5 becomes large due to a rising of the static pressure of the cooling gas on the wall surface 51 and the side wall surface 52 to facilitate the flowing of the cooling gas flow 102 into the suction opening 5, thereby improving the suction efficiency. In this embodiment, even the cooling gas escaped from the upper portion and both side ends of the wall surface 51 efficiently contributes to a rising of the static pressure on the side wall surface 52, the suction coefficient is more effectively improved.

Third Embodiment

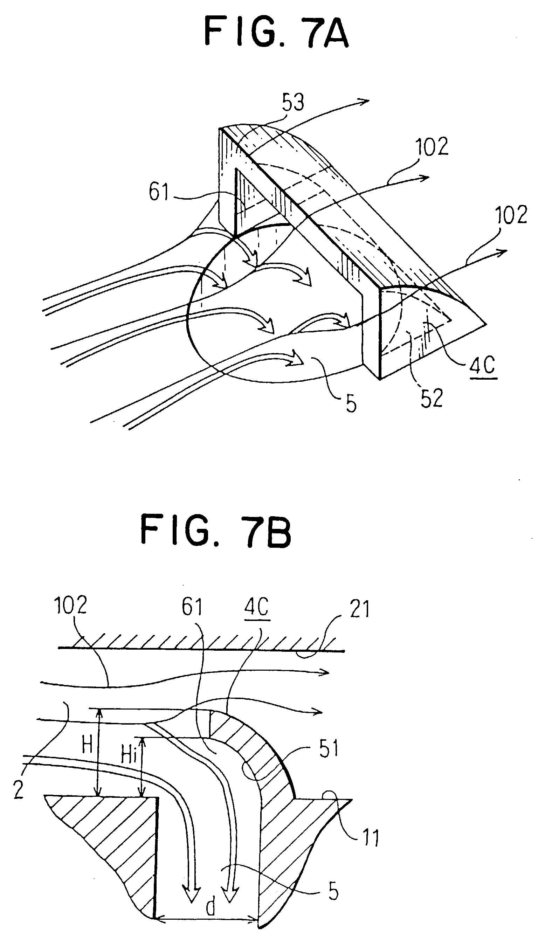

In the case where a wall surface 51 of a projection 4C is shaped in a curve as shown in Figs. 7A and 7B, a cooling gas flow 102 is gradually deflected along the wall surface 51 so that the cooling gas smoothly flows into a suction opening 5 without converting the dynamic pressure into the static pressure. Accordingly, the suction flow amount of the cooling gas flow 102 can be increased without increasing the axial torque due to the rising of the static pressure on the wall surface 51 according to the first embodiment as shown in Fig. 5.

Fourth Embodiment

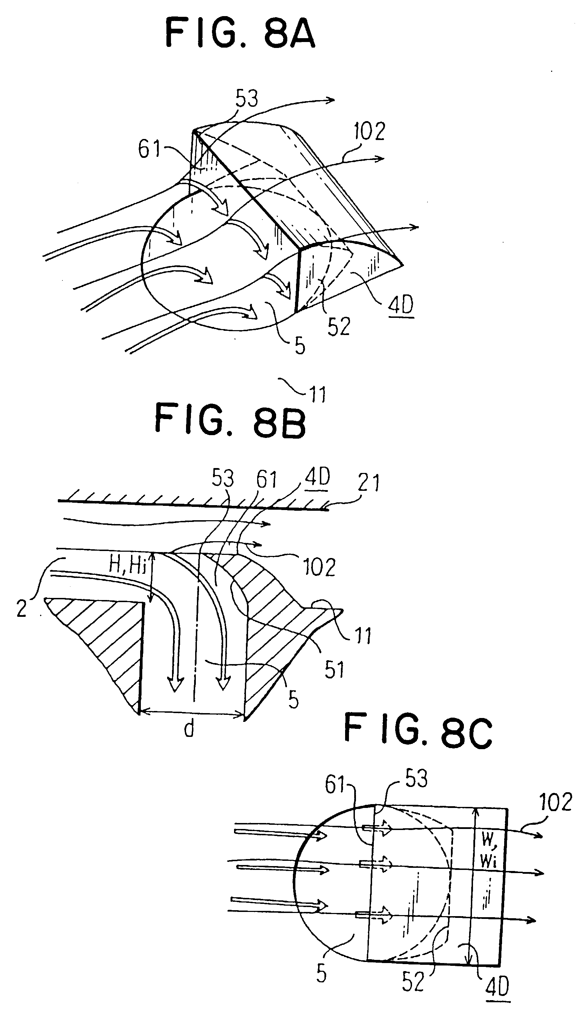

Fig. 8A is a perspective view showing a main portion of a rotary electric device according to a fourth embodiment of the present invention, Fig. 8B is a vertical cross-sectional view of Fig. 8A, and Fig. 8C is a plan view of Fig. 8A.

In this embodiment, a wall surface 51 of a projection 4D is shaped in a curve, and an inside of a side wall surface 52 is gradually reduced in width from an opening portion 61 toward its interior. Also, a tip portion 53 of the projection 4D is acute-angled.

In this embodiment, the tip portion 53 of the projection 4D is in the form of an edge so that the cooling gas smoothly flows into a suction opening 5 through the projection 4D. As a result, an increase of the axial torque can be further suppressed without increasing the static pressure of the cooling gas in comparison with the projection 4C of the third embodiment. Also, when the height H of the projection 4D is identical with the height Hi of the opening portion 61, and the width W of the projection 4D is identical with the width Wi of the opening portion 61, an area of the opening portion 61 can be increased, and a suction flow amount of the cooling gas flow 102 from the suction opening 5 can be more increased.

## Fifth Embodiment

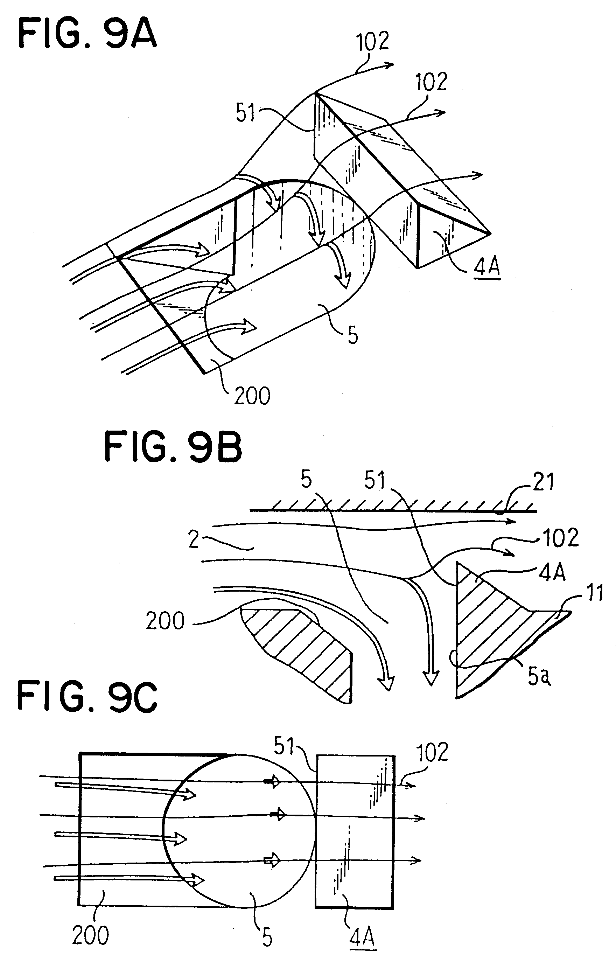

Fig. 9A is a perspective view showing a main portion of a rotary electric device according to a fifth embodiment of the present invention, Fig. 9B is a vertical cross-sectional view of Fig. 9A, and Fig. 9C is a plan view of Fig. 9A.

In this embodiment, a straight slope surface 200 is defined upstream of a suction opening 5 along a cooling gas flow 102 within an air gap 2.

In this embodiment, a cooling gas flow 102 which is accelerated circumferentially within the air gap 2 is generated by a wall surface sharing force on a rotor outer peripheral surface 11 which is caused by the viscosity of the cooling gas, and the cooling gas is allowed to flow into the suction opening 5. In this situation, the cooling gas is deflected along the slope surface 200, and simultaneously collides with a wall surface 5a on the downstream side of the cooling gas flow 102 and a wall surface 51 of a projection 4A, with the result that a component perpendicular to the wall surface 51 which is contained in the dynamic pressure of the cooling gas flow 102 is changed into a static pressure, to thereby allow the static pressure in the suction opening 5 to rise.

As mentioned above, because a direction of the cooling gas flow 102 is deflected by the slope surface 200, a part of the dynamic pressure of the cooling gas is used to flow in the suction opening 5 as it is, the flowing amount of the cooling gas flow 102 into the suction opening 5 increases in addition to an increase of the static pressure in the suction opening 5 due to collision of the cooling gas with the wall surface 5a of the suction opening 5 and the wall surface 51 of the projection 4A.

Also, there has been known that the loss of a fluid which is branched from a flow along the periphery of the rotor 10 in the suction opening 5 is a square function of a velocity of a flow in the suction opening 5, and with formation of a slope surface 200 in the suction opening 5, the loss of the fluid in the suction opening 5 can be reduced.

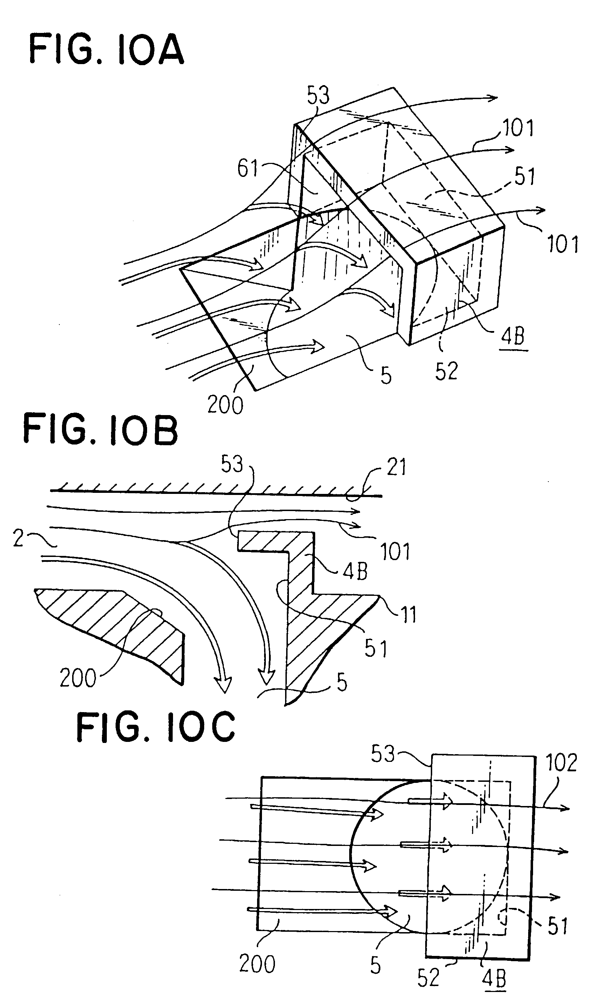

Also, as shown in Figs. 10A, 10B and 10C, the projection 4B shown in Fig. 6A may be disposed in the suction opening 5 having the slope surface 200.

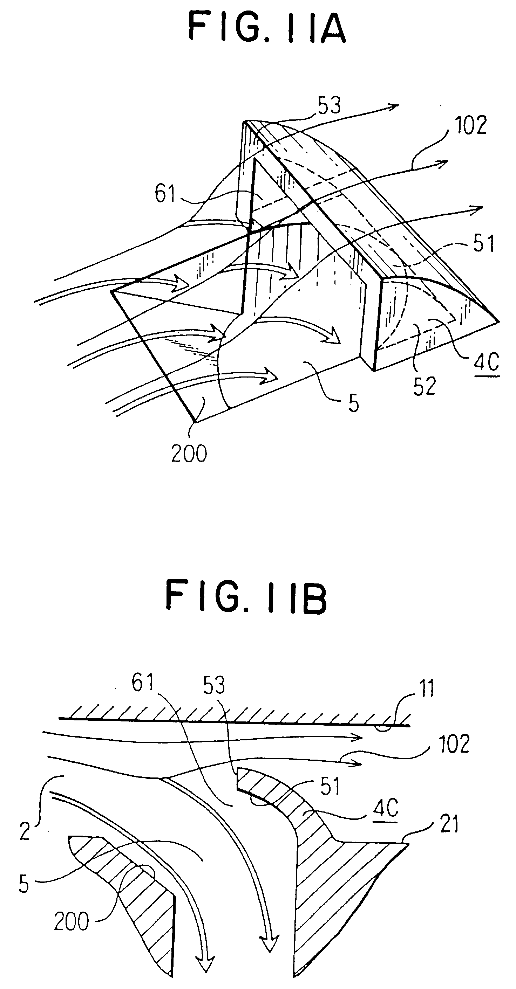

Further, as shown in Figs. 11A, 11B and 11C, the projection 4C shown in Fig. 7A may be disposed in the suction opening 5 having the slope surface 200.

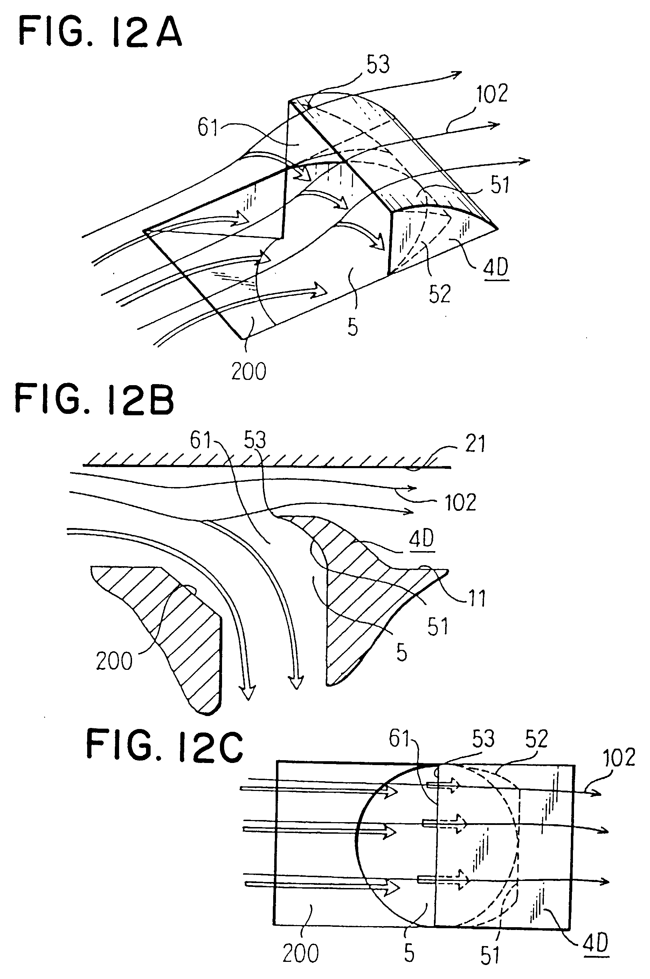

Still further, as shown in Figs. 12A, 12B and 12C, the projection 4D shown in Fig. 8A may be disposed in the suction opening 5 having the slope surface 200.

## Sixth Embodiment

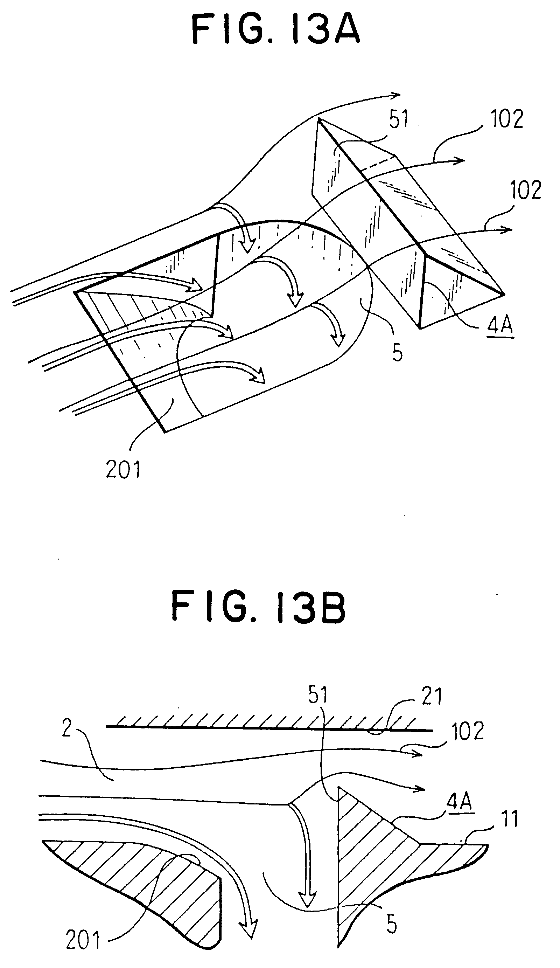

Also, as shown in Figs. 13A and 13B, the slope surface 200 shown in Figs. 9A and 9B may be formed into a curved slope surface 201.

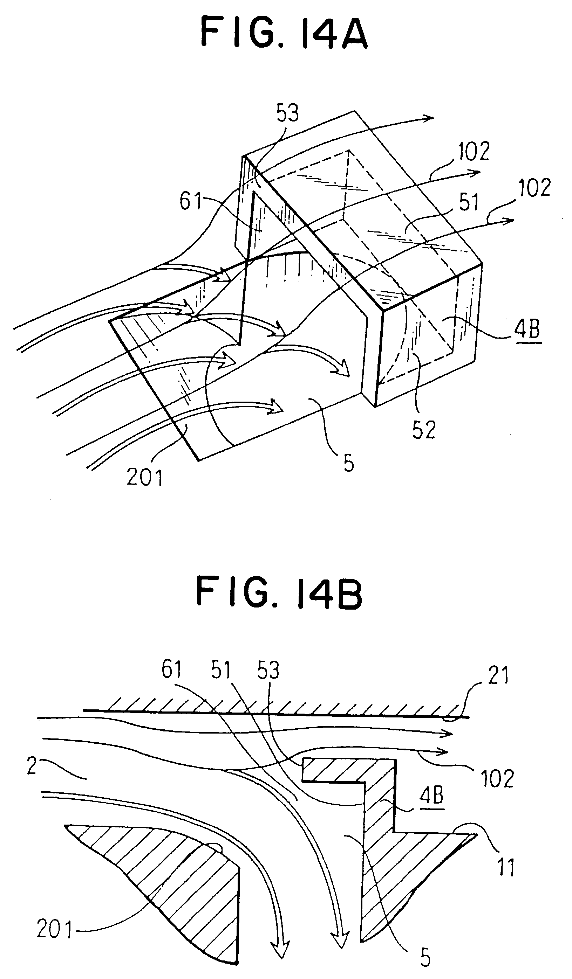

Further, as shown in Figs. 14A and 14B, the slope surface 200 shown in Figs. 10A and 10B may be formed into a curved slope surface 201.

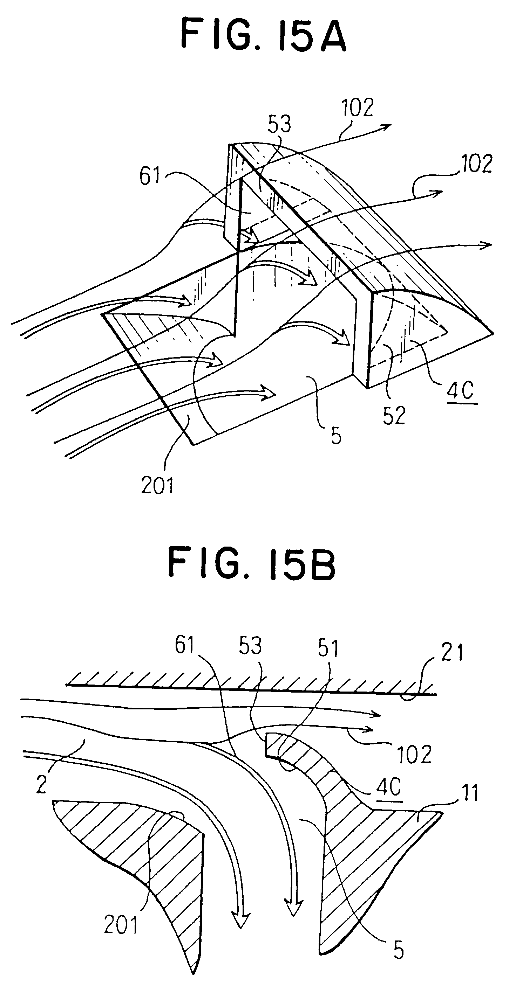

Still further, as shown in Figs. 15A and 15B, the slope surface 200 shown in Figs. 11A and 11B may be formed into a curved slope surface 201.

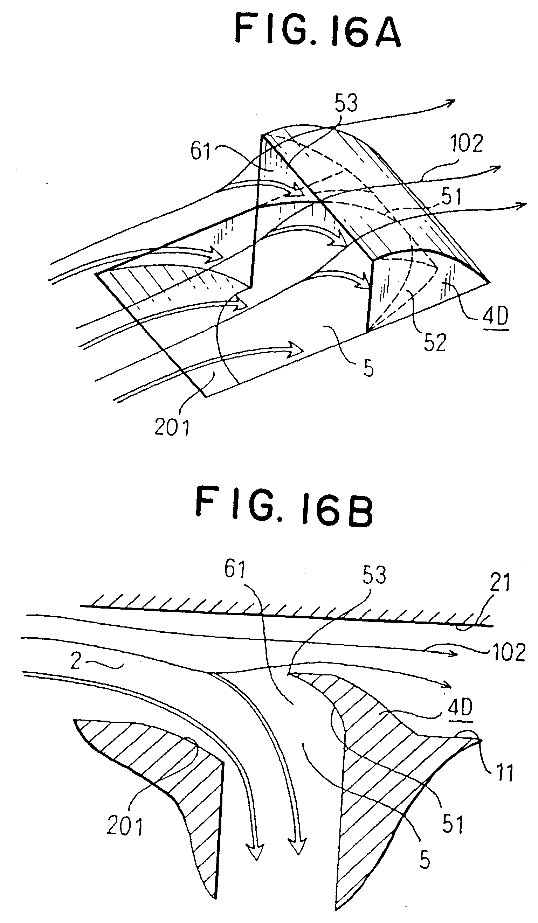

Yet still further, as shown in Figs. 16A and 16B, the slope surface 200 shown in Figs. 12A and 12B may be formed into a curved slope surface 201.

As shown in Figs. 13A to 16B, with the slope surface 201 being formed in a curved surface, since the cooling gas flow 102 is smoothly deflected on the slope surface 201, the separation of the cooling gas flow 102 is prevented, and the cooling gas flow 102 is allowed to flow into the suction opening 5, thereby being capable of further increasing the suction flow amount.

In the above respective embodiments, a case where the cross sectional configuration of the suction opening 5 is circular was described. However, this may be replaced by, for example, a rectangular cross-sectional configuration. Also, the width dimension of the projections 4A to 4D may be larger than the width dimension of the suction opening 5.

Also, in the above respective embodiments, a case where the projections 4A to 4D are located in the suction opening 5 on the rotor outer peripheral surface 11 was described. However, the same effect can be obtained even in the case where the projections 4A to 4D are disposed in the suction opening 5 on the stator inner peripheral surface 21.

## Seventh Embodiment

Within the rotary electric device, there exists a blow-out opening as well as the above-mentioned suction opening 5. Hereinafter, an optimization of the blow-out opening will be described.

Before describing the seventh embodiment, an action of the cooling gas when a projection is disposed upstream of the blow-out opening 103 along the cooling gas flow 102 will be described.

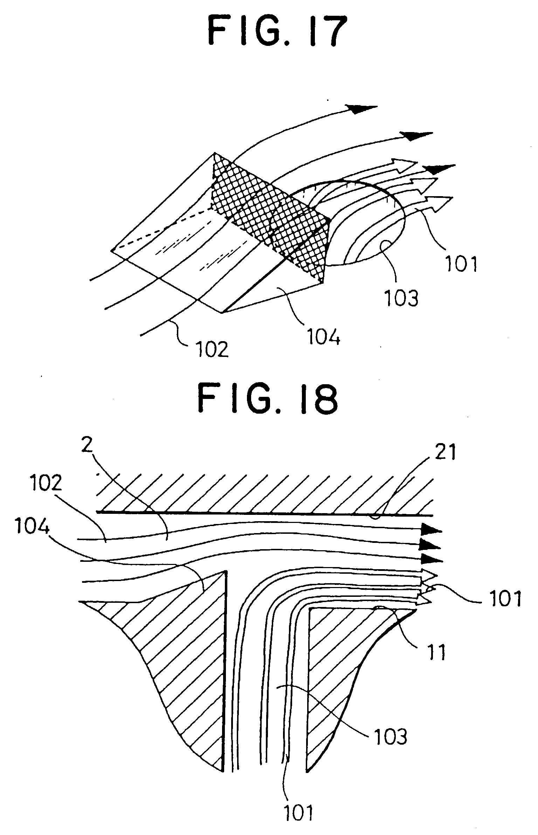

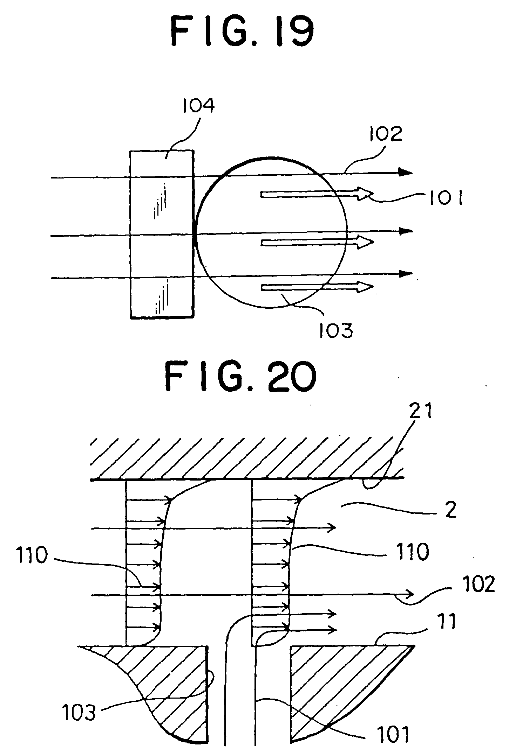

Fig. 17 is a perspective view showing a portion in the vicinity of a blow-out opening of a rotary electric device in a conventional example, Fig. 18 is a vertical cross-sectional view of Fig. 17, and Fig. 19 is a plan view of Fig. 17. In those figures, reference numeral 101 denotes a blow-out cooling gas flow, and 104 is a projection disposed upstream of a blow-out opening 103 along a cooling gas flow 102. The projection 104 suppresses the loss of pressure when the blow-out cooling gas flow 101 is blown out within an air gap 2.

In this example, a wall surface sharing force is generated on a rotor outer peripheral surface 11 with the rotation of a rotor 10, and a cooling gas within the air gap 2 is accelerated to generate a cooling gas flow 102 along a circumferential direction of the rotor within the air gap 2. In this example, as shown in Fig. 3 mentioned above, it was recognized that a mean flow velocity of the circumferential direction is about 1/2 of the rotor outer peripheral surface velocity by experiment.

Fig. 20 shows a rotating flow, that is, an appearance of the cooling gas flow 102 within the air gap 2. In the figure, reference numeral 110 is a distribution of a flow velocity viewed from a rotating coordinate system which is taken on the rotor 10. In the cooling gas flow 102 within the air gap 2, a turbulent boundary layer having a rapid flow velocity slope is developed in the vicinity of the stator inner surface 21 and the rotor outer peripheral surface 11 as indicated by a flow velocity distribution 110. Therefore, the blow-out cooling gas flow 101 which is blown out toward the air gap 2 from the blow-out opening 103 requires a large energy for breaking the boundary layer. In other words, the blow-out cooling gas flow 101 gives rise to the pressure loss when blowing out.

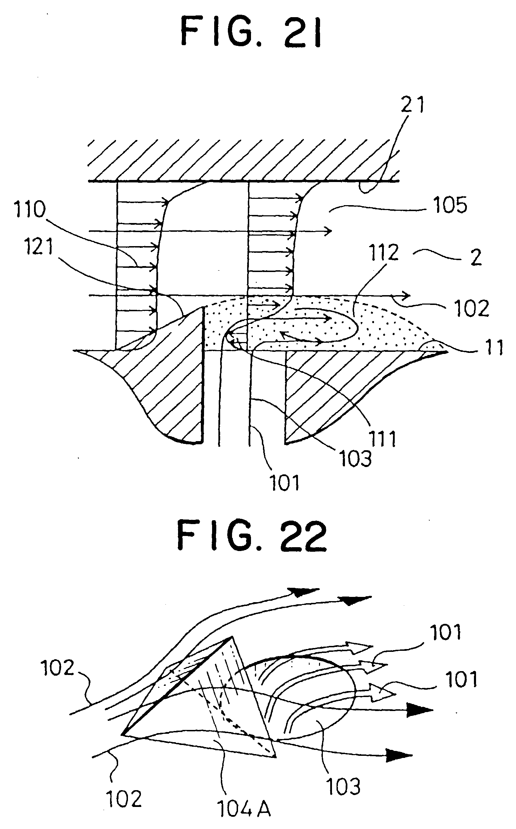

In the case where a projection 104 is disposed upstream of the blow-out opening 103 along the cooling gas flow 102, Fig. 21 is a graph showing a flow velocity distribution viewed from the rotating coordinate system of the rotor 10. The cooling gas flow 102 within the air gap 2 which is accelerated along a rotating direction collides with the projection 104, and is then deflected upward along its slope surface 121. The cooling gas flow 102 is then separated after achieving a top end of the projection 104. With this separating phenomenon, the velocity distribution downstream of the projection 104 (an upper portion of the blow-out opening 103) produces a reverse flow region as indicated by a velocity distribution 111 in the figure, to thereby form a dead air region 112. In the dead air region 112, the flow velocity of the cooling gas flow 102 within the air gap 2 is slight in comparison with a main flow velocity (about 1/2 of the rotor wall surface peripheral velocity). Also, the static pressure within the dead air region 112 is lowered. In other words, considering that an energy necessary for breaking the turbulent sharing layer to blow out the fluid is larger as a turbulent sharing force is strong, it is apparent that a small energy is sufficient to blow out the blow-out cooling gas flow 101 in the dead air region 112 formed by the projection 104. In other words, with the provision of the projection 104 upstream of the blow-out opening 103 along the cooling gas flow 102, the pressure loss when blowing out the blow-out cooling gas flow 101 within the air gap 2 is suppressed.

However, when the rotor 10 is allowed to rotate while maintaining a given r.p.m. by protruding the projection 104 from the rotor outer peripheral surface 11, the axial torque that makes the rotor shaft rotate must be increased. A method of calculating an increased amount of the axial torque is described above.

The invention of the seventh embodiment is the invention made for reducing a rising of the axial torque, which will be described below with reference to Figs. 22 to 24.

The projection 104 shown in Fig. 17 is rectangular in projected shape along a rotor rotating direction, and the axial torque which is derived from the fluid pressure exerted on the projection 104 is large. In this embodiment, as shown in Fig. 22, a projection 104A is tetrahedron-shaped, and its projected shape is of a triangle whose corner portions are removed so that its area becomes small, and an increase of the axial torque due to location of the projection 104A is suppressed.

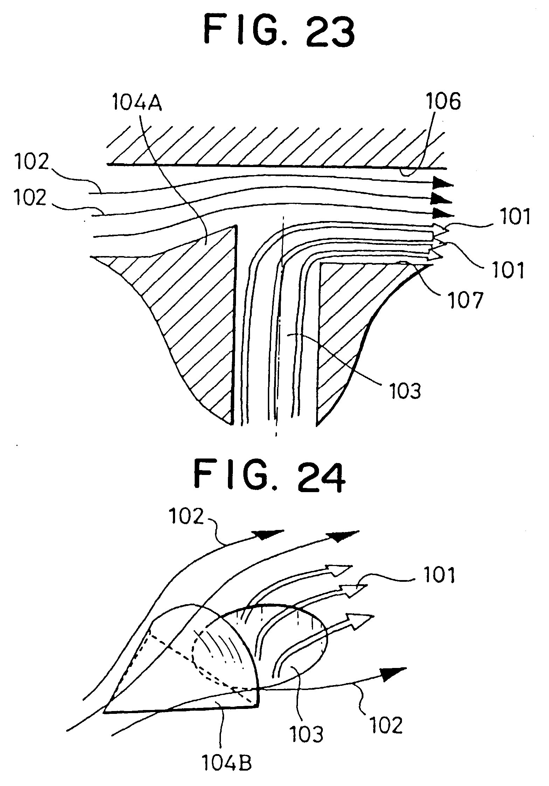

Fig. 23 is a cross-sectional view of Fig. 22.

In this embodiment, similarly to the triangle pole shaped projection 104 shown in Fig. 17, the pressure loss when blowing out the blow-out cooling gas flow 101 within the air gap 2 is suppressed. Also, because the projection 104A is shaped in a tetrahedron so that the projected surface 113 is reduced from a rectangle to a triangle, an increase of the axial torque which is caused by location of the projection 104A can be reduced.

### Eighth Embodiment

Fig. 24 shows an example of a projection 104B for the purpose of reducing the axial torque, likewise. The entire configuration of the projection 104B is semi-conical, and the configuration of the projected surface is a semi-circle whose corner portions are removed to reduce the projected area of the projection 104B toward the rotor rotating direction, thereby being capable of reducing an increase in the axial torque which is caused by location of the projection 104B.

### Ninth Embodiment

A projection 104 is provided for forming a dead air region 112, and may be shaped of a cover that covers a part of a blow-out opening 103.

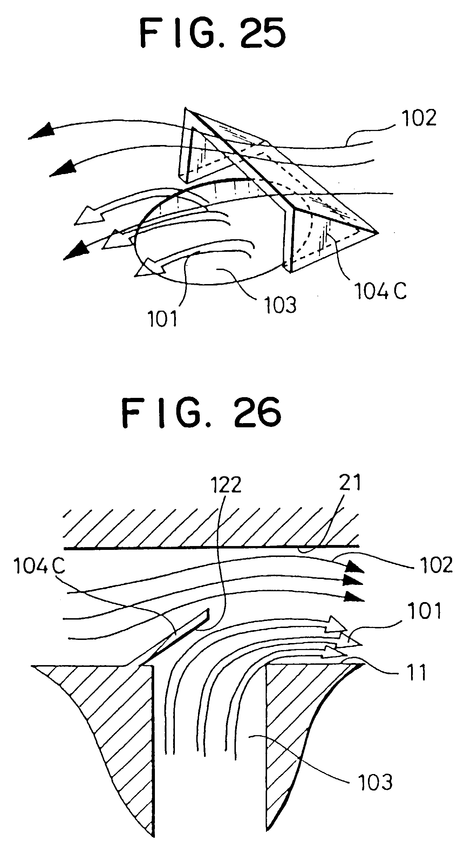

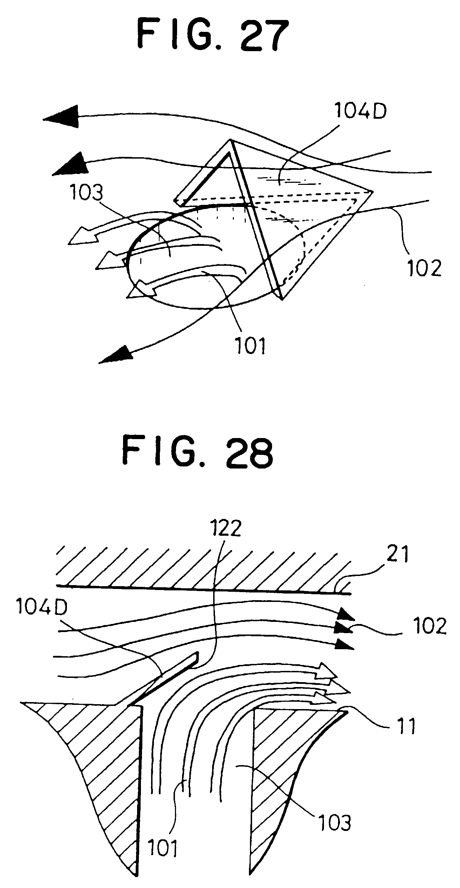

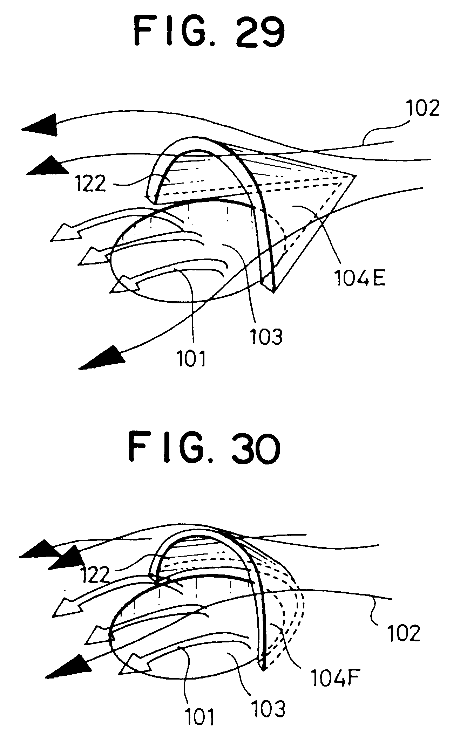

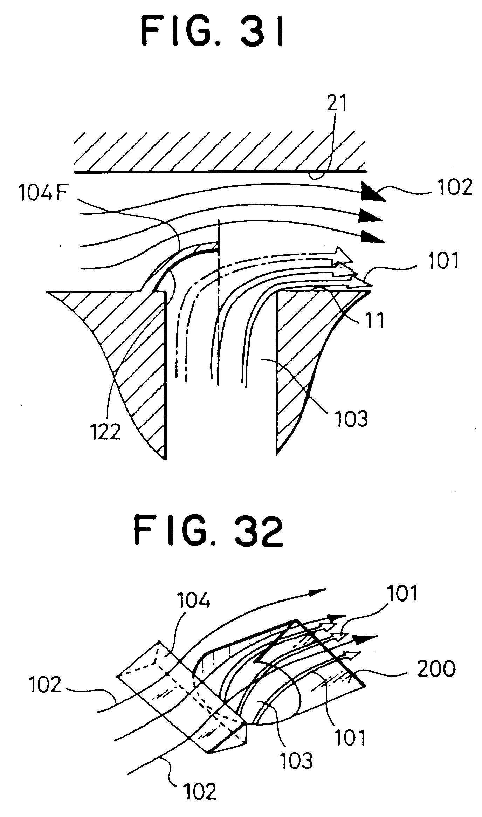

For example, Fig. 25 is a perspective view showing a projection 104C which is U-shaped in a vertical cross section with respect to the cooling gas flow 102, and Fig. 26 is a cross-sectional view of Fig. 25. Fig. 27 is a perspective view showing a projection 104D which is triangular-mountain-shaped in a vertical cross section with respect to the cooling gas flow 102, and Fig. 28 is a cross-sectional view of Fig. 27. Fig. 29 is a perspective view of a semi-conical projection 104E, Fig. 30 is a perspective view of a 1/4 spherical projection 104F, and Fig. 31 is a cross-sectional view of Fig. 30.

With application of those cover-type projections 104A to 104F, because the projections can be attached to the rotor outer peripheral surface 11 so as to cover a part of the blow-out opening 103, a space where the projections 104A to 104F are located on the rotor outer peripheral surface 11 can be reduced, that is, the peripheral dimension (a diameter of the rotor 10) of the rotor 10 for location of the projections 104A to 104f need not be especially increased.

Also, as is apparent from Figs. 25 to 31, because the direction of the blow-out cooling gas flow 101 which is blown out from the blow-out opening 103 is deflected in a direction of the cooling gas flow 102 within the air gap 2 along an inner wall surface 122 of the projections 104C, 104D, 104E and 104F, a dynamic pressure of the cooling gas within the rotor cooling duct 12 can be utilized for direct blow-out, whereby the blow-out flow amount of the blow-out cooling gas flow 101 increases regardless of the dimensions of the separation region of the cooling gas flow 102 within the air gap 2.

The above-mentioned seventh to ninth embodiments are described with reference to a case where the projections 104A, 104B, 104C, 104D, 104E and 104F are located upstream of the blow-out opening 103 formed in the rotor outer peripheral surface 11 along the cooling gas flow 102. However, it is needless to say that the same effect can be obtained even in a case where a projection is located upstream of the blow-out opening 103 in the stator inner peripheral surface 21.

## Tenth Embodiment

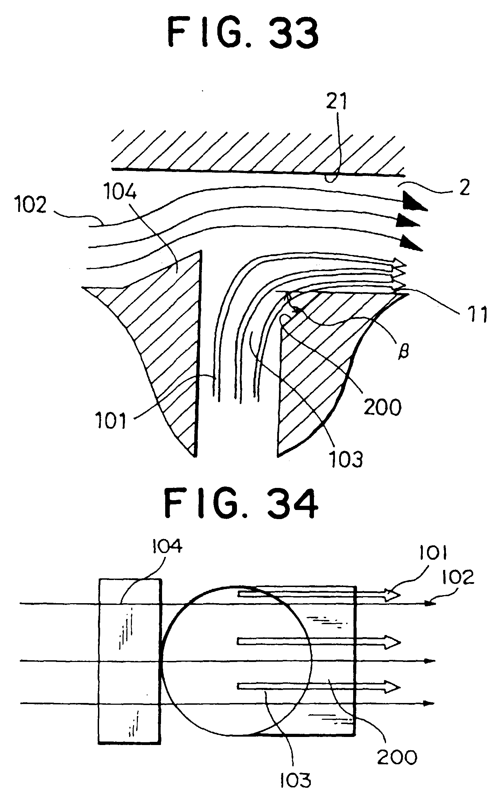

Subsequently, a tenth embodiment of the present invention will be described with reference to the drawings. Fig. 32 is a perspective view showing a main portion of a rotary electric device according to this embodiment, Fig. 33 is a vertical cross-sectional view of Fig. 32, and Fig. 34 is a plan view of Fig. 32. In those figures, a slope surface 200 is further formed downstream of a blow-out opening 103 along a cooling gas flow 102 in addition to what is shown in Figs. 17 to 19. Symbol in Fig. 33 denotes an angle at which a rotor outer peripheral surface 11 and a slope surface 200 intersects each other.

Then, the operation will be described. A blow-out cooling gas flow 101 that flows from the center of a rotor radially is blown out toward an air gap 2 perpendicularly to a flow direction of the cooling gas flow 102 within the air gap 2 because a flow path of the blow-out opening 103 is defined perpendicularly to the rotor outer peripheral surface 11. In this example, a flow path width of the blow-out opening 103 is designed to be smoothly enlarged toward the rotor outer peripheral surface 11 so as to change a blow-out angle of the blow-out cooling gas flow 101 when blowing out the blow-out cooling gas flow 101 toward the air gap 2. The reason is that because the angle β is designed to be smoothly enlarged so as to be acute-angled, the blow-out cooling gas 101 flows along the slope surface 200 without being apart from the rotor outer peripheral surface 11, and a velocity component perpendicular to the cooling gas flow 102 within the air gap 2 when blowing out is reduced, whereby the pressure loss accompanied by the collision of the fluid is also reduced.

Also, with formation of the slope surface 200, the flow path is enlarged to reduce the blow-out velocity of the blow-out cooling gas flow 101 from the blow-out opening 103. There has been well known that the pressure loss of a fluid due to a confluence in a confluent flow path becomes generally smaller as the flow velocity is small. A reduction of the flow velocity reduces the confluent pressure loss accompanied by blow-out of the blow-out cooling gas 101 so that the blow-out flow amount can be increased.

## Eleventh Embodiment

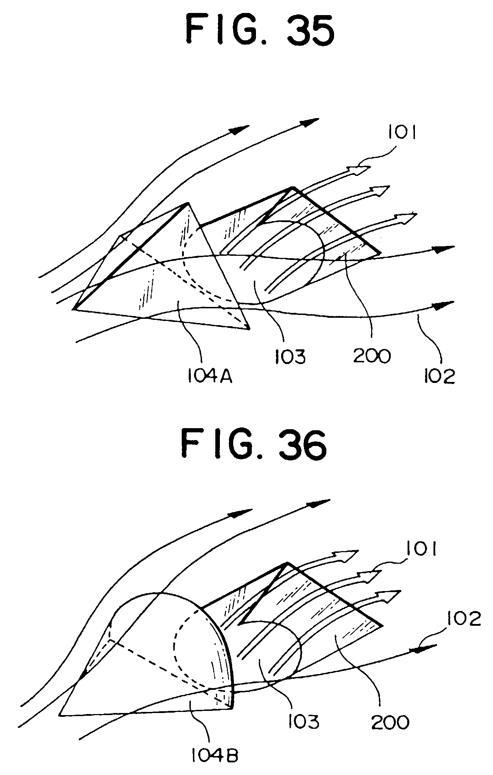

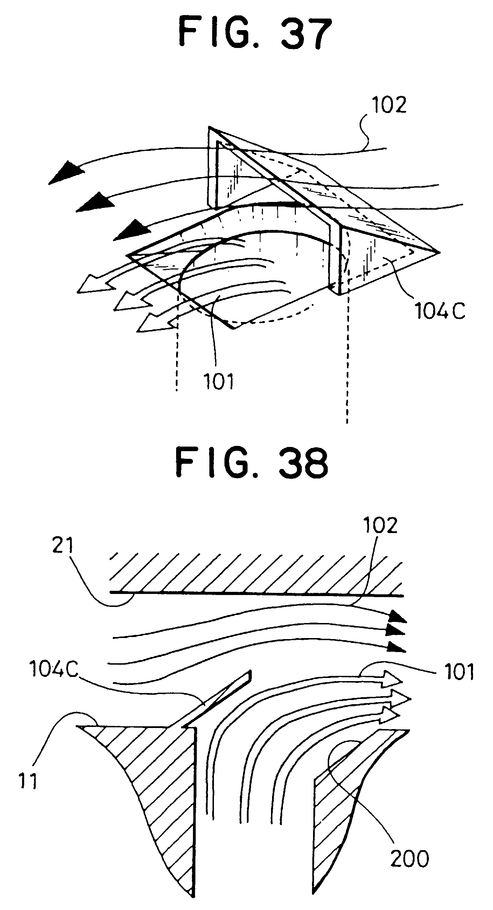

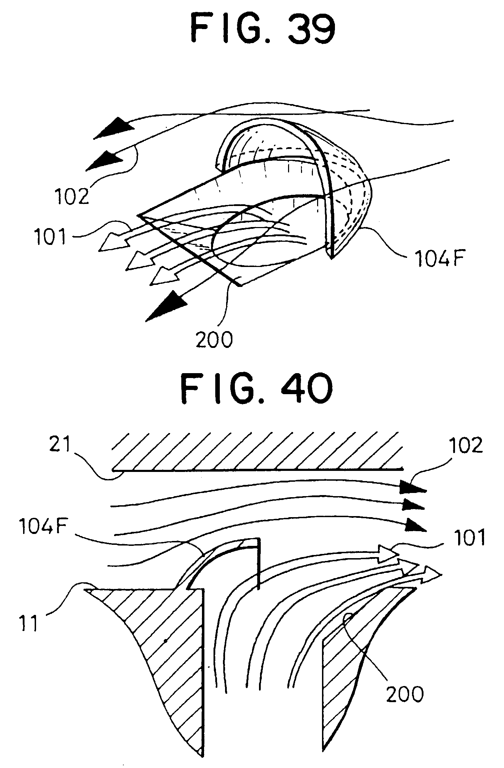

Although the projection 104 shown in Figs. 32 to 34 is shaped in a triangular pole, it is needless to say that it is not limited to the triangular pole. As its examples, Figs. 35 to 40 show examples in which the respective projections 104A to 104F are combined with the slope surface 200. A projection 104A of Fig. 36 is tetrahedral, a projection 104B of Fig. 36 is semi-conical, a projection 104C of Fig. 37 is of a cover-shaped triangular pole, and Fig. 38 is a vertical cross-sectional view thereof. Also, a projection 104F of Fig. 39 is of a cover-shaped 1/4 sphere, and Fig. 40 is a vertical cross-sectional view thereof.

Although the slope surface 200 in the tenth and eleventh embodiments of the present invention is flat-shaped, it may be curved.

## Twelfth Embodiment

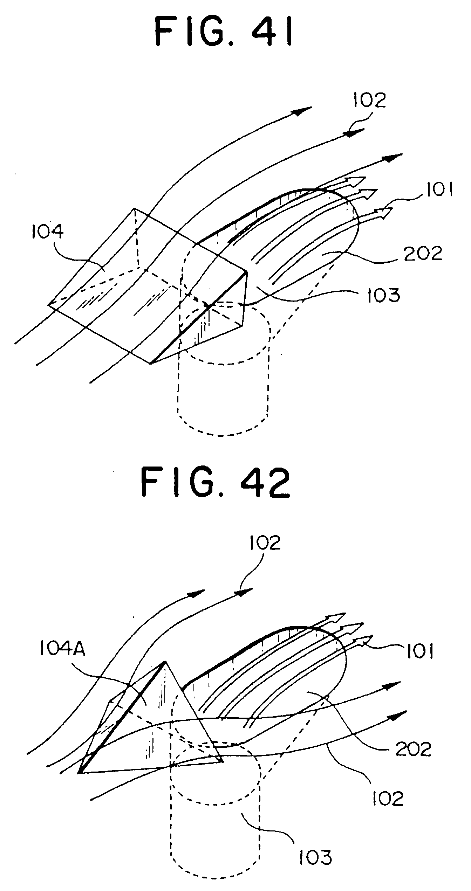

A slope 202 of Fig. 41 is enlarged in the cross-sectional area of a flow path along the peripheral direction of a rotor 10, and the entire configuration of a blow-out opening 103 is elliptical.

Similarly, in the blow-out opening 103 having the slope surface 202, a blow-out direction of the blow-out cooling gas flow 101 is deflected along a rotor outer peripheral surface 11, and a blow-out flow velocity is also reduced due to an increase in the sectional area of a flow path to reduce the confluent pressure loss accompanied by blow-out of the blow-out cooling gas 101, thereby being capable of increasing the blow-out flow amount from the blow-out opening 103.

It is needless to say that the respective projections 104A, 104B, 104C and 104F may be disposed in the blow-out opening 103 having the slope surface 202 of this configuration.

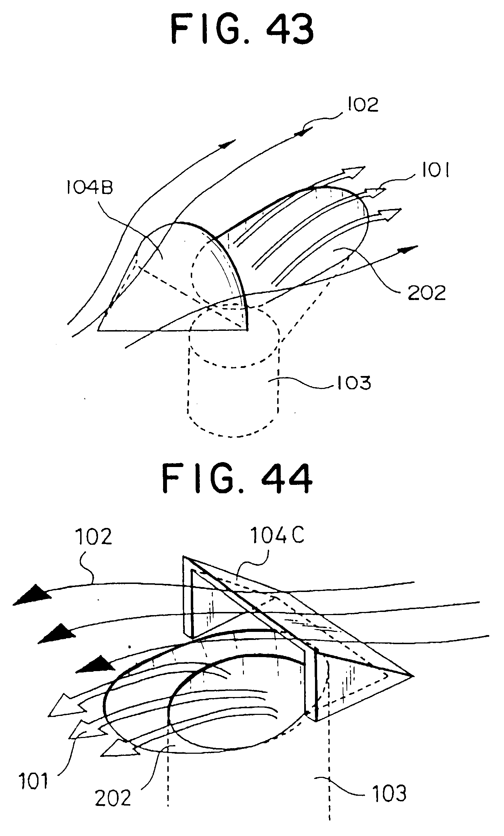

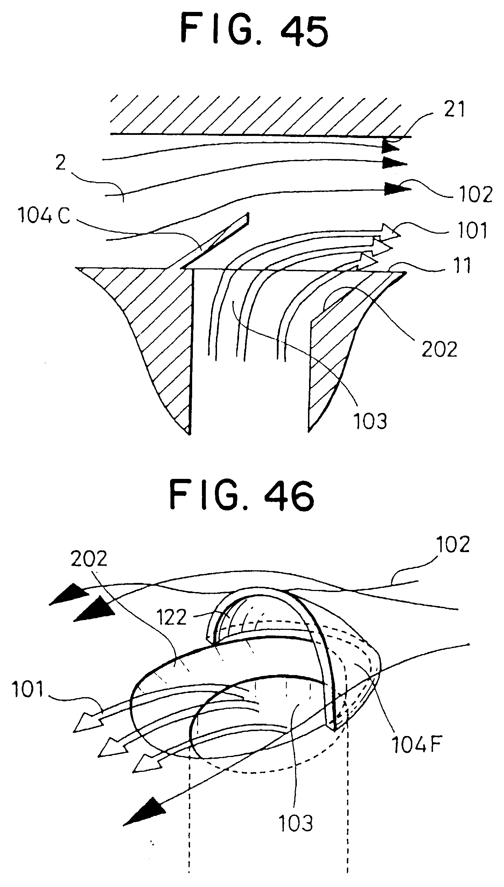

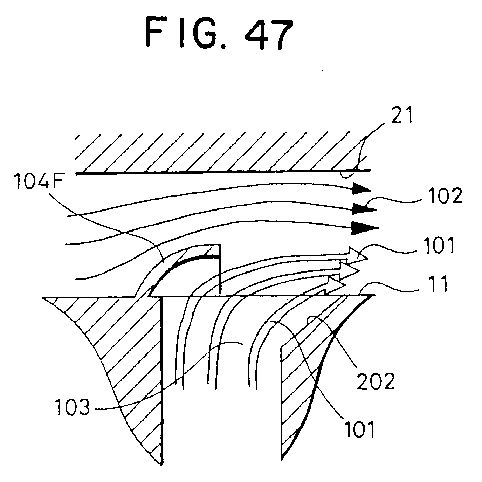

Fig. 42 is a diagram showing the provision of a tetrahedral projection 104A, Fig. 43 is a diagram showing the provision of a semi-conical projection 104B, Fig. 44 is a diagram showing the provision of a cover-shaped triangular pole type projection 104C, and Fig. 45 is a vertical cross-sectional view of Fig. 44. Also, Fig. 46 is a diagram showing the provision of a cover-shaped 1/4 spherical projection 104F, and Fig. 47 is a vertical cross-sectional view of Fig. 46.

Although the above-mentioned respective embodiments are described with reference to a case where the projections 104A, 104B, 104C and 104F are disposed on the rotor outer peripheral surface 11, the projections 104D and 104E may be used instead. Also, it is needless to say that the same effect can be obtained in a case where those projections 104A, 104B, 104C, 104D and 104E are disposed on the stator inner peripheral surface 21, likewise.

## Thirteenth Embodiment

Fig. 48A is a plan view showing a rotor outer peripheral surface 11 according to a thirteenth embodiment of the present invention, in which a direction along which a projection 104 disposed in the periphery of a blow-out opening 103 on a rotor outer peripheral surface 11, and a slope direction of the slope surface 200 in the thirteenth embodiment are made identical with a direction of the cooling gas flow 102 within an air gap 2.

Fig. 49A is an enlarged diagram showing a portion in the vicinity of the blow-out opening 103 shown in Fig. 48A, in which the blow-out opening 103 having the slope surface 200 is formed on an arrow 141 that indicates a direction along which the projection 104 is located.

A directivity of the cooling gas flow 102 will be described with reference to a case of the above-mentioned ventilation cooling system shown in Fig. 60 in which the radial flow cooling system is combined with the radially outward ventilating system as an example.

A part of the cooling gas that flows out of a fan 41 flows directly into an air gap 2 from an end portion of the air gap 2. A velocity vector of the cooling gas flow 102 in the vicinity of the end portion of the air gap 2 in this situation is a composite vector consisting of a velocity component Va of the cooling gas flow 102 axially of the rotor and a velocity component Vb of the cooling gas along the peripheral direction of the rotor as shown in a velocity vector diagram of Fig. 49B. The velocity vector defines an angle $\alpha$ with respect to an arrow 142 which is perpendicular to the rotor shaft 5. In this situation, the velocity component Vb of the cooling gas along the rotor peripheral direction is 1/2 of the rotating peripheral velocity of the rotor 10 as described above.

Fig. 48B shows a state of the velocity component Va of the cooling gas flow 102 within the air gap 2 along the rotor axial direction. In the figure, the axis of ordinate represents a dimensionless velocity obtained by dividing the axial velocity component Va of the cooling gas flow 102 within the air gap 2 by an axial velocity component $Va_0$ of the cooling gas flow within the air gap 2 at the rotor end portion, and the axis of abscissa represents a position of the rotor shaft 15.

The cooling gas flow 102 that flows out of the end portion of the air gap 2 is mixed with a cooling gas that flows out of the blow-out opening 103 in the rotor outer peripheral surface 11, and then reaches the center of the rotor 10 while being repeatedly branched into suction flows by the suction openings 5 defined in the stator inner peripheral surface 21. In this situation, the velocity component Va of the cooling gas flow 102 along the rotor axial direction is reduced more as it approaches the center of the rotor 10, as shown in Fig. 48B.

Similarly, as shown in Fig. 48C (the axis of ordinate represents a dimensionless velocity obtained by dividing an angle $\alpha$ defined between a direction of the cooling gas flow 102 within the air gap 2 and a direction perpendicular to the rotor shaft by an angle $\alpha_0$ defined between a direction of the cooling gas flow 102 within the air gap 2 on the rotor end portion and the direction perpendicular to the rotor shaft, and the axis of abscissa represents a position of the rotor shaft 15), the angle $\alpha$ is a maximum value on the rotor end portion, gradually reduces toward the center of the rotor 10 and becomes zero in the center of the rotor 10.

As shown in Fig. 49C, when the projection 104 and the slope surface 200 are located on an arrow 142 perpendicular to the rotor shaft 15 within the air gap 2 having a velocity component along the rotor axial direction, an arrow 142 on the projection 104 and the slope surface 20 and an arrow 143 indicating the direction of the cooling gas flow 102 define an angle $\alpha_3$.

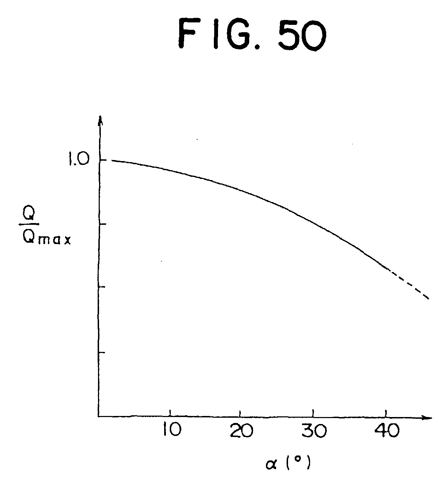

In Fig. 50, the axis of ordinate represents a dimensionless flow amount obtained by dividing the blow-out flow amount $Q$ by a blow-out flow amount Qmax when a direction along which the projection 104 and the slope surface 200 are disposed and a direction of the cooling gas flow 102 within the air gap 2 are identical with each other, and the axis of abscissa represents an angle $\alpha_3$ shown in Fig. 49C, and it is found from the figure that the blow-out flow amount is more reduced as the angle $\alpha_3$ is large.

As is apparent from the above, with the structure in which the angle $\alpha_3$ is made small, that is, the direction along which the projection 104 and the slope surface 200 are disposed approaches the direction of the cooling gas flow 102 within the air gap 2, the blow-out efficiency of the cooling gas from the blow-out opening 103 is improved, and when the direction along which the projection 104 and the slope surface 200 are disposed is identical with the direction of the cooling gas flow 102 within the air gap 2, the blow-out efficiency of the cooling gas from the blow-out opening 103 becomes maximum.

It is needless to say that this embodiment is similarly applicable to the first to twelfth embodiments. Also, it is needless to say that this embodiment is applicable to the suction opening 5 or the blow-out opening 103 formed in the stator inner peripheral surface 21.

## Fourteenth Embodiment

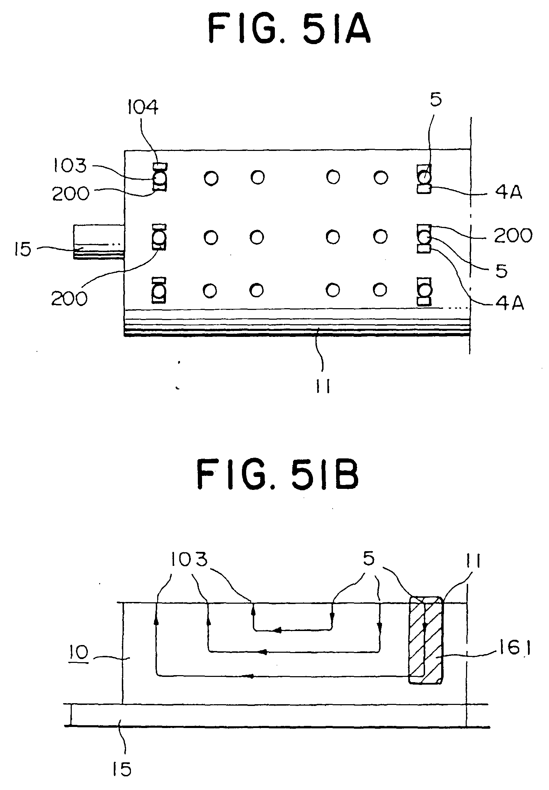

Fig. 51A is a plan view showing a rotor outer peripheral surface 11 according to a fourteenth embodiment of the present invention, Fig. 51B is a vertical cross-sectional structural view of Fig. 51A.

In this embodiment, in the rotor outer peripheral surface 11 of the rotor 10 in the above-mentioned gap pickup cooling system, a large number of projections 4A (Fig. 9) in the fifth embodiment and projections 104 (Fig. 32) in the tenth embodiment are disposed in a region where it is estimated that a hot spot occurs. In other words, the projections 4A are disposed downstream of the suction opening 5 having the slope surface 200 along the cooling gas flow 102, and the projections 104 are disposed upstream of the blow-out opening 103 having the slope surface 200 along the cooling gas flow 102.

During running of the rotary electric device, a high-temperature portion (hot spot 161) locally occurs because the distribution of the cooling gas flow amount is deflected and so on. As described above, the occurrence of the hot spot 161 becomes a factor that leads to a destroy of the rotary electric device due to the dielectric breakdown or deviation of the rotor shaft.

A place where the hot spots 161 occur is experientially found, and a large number of projections 4A and 104 are located on that place to increase the flow amount of the cooling gas and enhance the cooling performance at that place, thereby being capable of preventing the hot spot from occurring.

Fig. 52 is a graph showing the distribution of a rotor coil temperature within the rotor 10, in which the axis of ordinate represents a rotor coil temperature, and the axis of abscissa represents an axial position of the rotor 10. A dashed line 162 in the graph represents the temperature distribution of the rotor coil when the projections 4A and 104 are uniformly disposed on the rotor outer peripheral surface 11, and a solid line 163 represents the temperature distribution of the rotor coil according to this embodiment.

As is apparent from the figure, with the arrangement of the projections 4A and 104 on the hot spot portion, the temperature distribution of the rotor coil can be appropriated.

It is needless to say that this embodiment is applicable to any one of the first to thirteenth embodiments.

As was described above, the rotary electric device according to the present invention includes: a rotor having a rotor cooling duct into which a cooling gas flows; a stator disposed on the outer peripheral side of the rotor through an air gap and having a stator cooling duct into which the cooling gas flows; and a projection disposed downstream of at least one of a suction opening of the rotor cooling duct which faces the air gap and a suction opening of the stator cooling duct which faces the air gap along the cooling gas flow within the air gap, for directing the cooling gas flow into the suction opening. With this structure, since the cooling gas flow that flows while rotating within the air gap collides with the projection, and a dynamic pressure of the cooling gas is converted into a static pressure to allow the static pressure of the cooling gas in the vicinity of the suction opening to rise, the suction flow amount of the cooling gas flow from the suction opening increases, to thereby improve the cooling efficiency of the rotor and the stator.

Also, according to the present invention, when the projection for the suction opening surrounds part of the suction opening, the dynamic pressure of the cooling gas flow that collides the projection is more efficiently converted into a static pressure, and the flow amount of the cooling gas flow which is sucked into the suction opening more increases, to thereby more improve the cooling efficiency of the rotor and the stator.

Further, according to the present invention, when an inner wall surface of the projection for the suction opening is shaped in a curve along a direction of the cooling gas flow, the cooling gas flow is efficiently led to the suction opening while being gradually deflected along the inner wall surface, to thereby improve the cooling efficiency of the rotor and the stator with an increase in the suction flow amount of the cooling gas flow into the suction opening. Also, since the collision of the cooling gas flow with the projection does not make the static pressure largely rise, an increase in the axial torque due to the rising of the static pressure on the projection (the r.p.m. of the rotor shaft is kept constant) can be suppressed.

Still further, according to the present invention, when the tip portion of the projection for the suction opening, which collides with the cooling gas, is acute-angled, since the pressure loss when the cooling gas collides with the tip portion of the projection is hardly produced, the dynamic pressure of the cooling gas flow can be employed for allowing the cooling gas to flow into the suction opening, thereby being capable of increasing the flow amount of the cooling gas flow into the suction opening and improving the cooling efficiency of the rotor and the stator.

Still further, according to the present invention, when a slope surface that deflects the cooling gas flow toward the cooling duct side and also enlarges a sectional area of a flow path of the cooling gas flow is defined on the upstream side of the suction opening, since the flow velocity in the suction opening is decreased, the pressure loss of the cooling gas in the suction opening can be suppressed to a lower value because the pressure loss when the cooling gas flow flows into the suction opening is a square function of a flow velocity in the suction opening, thereby being capable of increasing the suction flow amount.

Still further, according to the present invention, when the slope surface for the suction opening is shaped in a curve, the cooling gas flow is smoothly deflected toward the cooling duct side, thereby being capable of preventing the pressure loss due to the separation of the cooling gas flow from the slope surface and utilizing the dynamic pressure of the cooling gas for the suction flow of the cooling gas as it is.

Yet still further, the rotary electric device according to the present invention includes: a rotor having a rotor cooling duct into which a cooling gas flows; a stator disposed on an outer peripheral side of the rotor through an air gap and having a stator cooling duct into which the cooling gas flows; and a projection disposed upstream of at least one of a blow-out opening of the rotor cooling duct which faces the air gap and a blow-out opening of the stator cooling duct which faces the air gap along the cooling gas flow within the air gap, for directing the blow-out cooling gas flow blown out of the blow-out opening into the air gap. With this structure, the pressure loss of the blow-out cooling gas flow when the blow-out cooling gas flow is blown out of the blow-out opening into the air gap can be small, and the blow-out flow amount of the blow-out cooling gas flow from the blow-out opening can be increased.

Also, since the projection is shaped in such a manner that the corner portions of the projection are removed so that a projected area of the projection along a direction of rotating the rotor is small, an increase in the axial torque occurring with the location of the projection can be suppressed.

Yet still further, according to the present invention, when the projection for the blow-out opening surrounds a part of the blow-out opening, the dimension of a direction of the cooling gas flow can be reduced.

Yet still further, according to the present invention, when an inner wall surface of the projection for the blow-out opening is shaped in a curve along a direction of the cooling gas flow, the blow-out cooling gas flow smoothly flows along the inner wall surface, and the dynamic pressure of the blow-out cooling gas flow is utilized for blow-out of the blow-out cooling gas from the blow-out opening as it is, to thereby increase the blow-out flow amount of the blow-out cooling gas flow from the blow-out opening.

Yet still further, according to the present invention, when a slope surface that enlarges a sectional area of a flow path of a blow-out cooling gas flow is defined on the downstream side of the blow-out opening, the blow-out cooling gas flow flows along the slope surface without being separated from the slope surface, and a velocity component perpendicular to the flow direction of the cooling gas within the air gap when blowing out is reduced, to thereby reduce the pressure loss caused by the collision of the cooling gas flow with the blow-out cooling gas flow. Also, the pressure loss of the fluid in the confluent flow path due to the confluence is smaller as the flow velocity is small, and a decrease in the flow velocity which is accompanied by an enlarged sectional area of the flow path makes the confluent pressure loss accompanied by blow-out of the blow-out cooling gas flow reduce, to thereby increase the blow-out flow amount of the blow-out cooling gas flow from the blow-out opening.

Yet still further, according to the present invention, when the slope surface formed in the blow-out opening is shaped in a curve, the blow-out cooling gas flow does not separate from the slope so that the dynamic pressure of the blow-out cooling gas flow is utilized for blow-out of the blow-out cooling gas from the blow-out opening as it is.

Yet still further, according to the present invention, when the projection is so designed as to collide with the cooling gas flow at a right angle, the suction efficiency of the cooling gas flow in the suction opening and the blow-out efficiency of the blow-out cooling gas flow in the blow-out opening can be remarkably improved.

Yet still further, according to the present invention, when a larger number of projections are disposed in a region which is estimated to be a hot spot of the rotor and in a region which is estimated to be a hot spot of the stator, in comparison with other regions, the cooling performance in those regions is improved, thereby being capable of preventing the hot spots of the rotor and the stator from occurring.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated.

**Claims**

1. A rotary electric device, comprising:

   - a rotor (10) having a rotor cooling duct (12) through which a cooling gas flows;
   - a stator (20) disposed on the outer peripheral side of the rotor (10) through an air gap (2) and having a stator cooling duct (22) through which the cooling gas flows; and
   - a projection (4A, 4B, 4C, 4D) disposed downstream of at least one of a suction opening (5) of the rotor cooling duct (12) which faces the air gap (2) and a suction opening (5) of the stator cooling duct (22) which faces the air gap (2) along the cooling gas flow within the air gap (2), for directing the cooling gas (102) flow into the suction opening (5).

2. The device as claimed in claim 1, wherein the projection (4B, 4C, 4D) surrounds part of the suction opening (5).

3. The device as claimed in claim 1 or 2, wherein the inner wall surface (51) of the projection (4C) is shaped in a curve along which the cooling gas flows.

4. The device as claimed in any one of claims 1, 2 and 3, wherein the tip portion (53) of the projection (4D) with which the cooling gas collides is acute-angled.

5. The device as claimed in any one of claims 1 to 4, wherein a slope surface (200, 201) that deflects the cooling gas flow (102) toward the cooling duct side and enlarges the sectional area of the flow path of the cooling gas flow (102) is defined upstream of the suction opening (5).

6.  A rotary electric device, comprising:

    -   a rotor (10) having a rotor cooling duct (12) through which a cooling gas flows;
    -   a stator (20) disposed on the outer peripheral side of the rotor (10) through an air gap (2) and having a stator cooling duct (22) through which the cooling gas flows; and
    -   a projection (104, 104A to 104F) disposed upstream of at least one of a blow-out opening (103) of the rotor cooling duct (12) which faces the air gap (2) and a blow-out opening (103) of the stator cooling duct (12) which faces the air gap (2) along the cooling gas flow (102) within the air gap (2), for directing the blow-out cooling gas flow (101) blown out of the blow-out opening (103) into the air gap (2);
    -   wherein the projection (104, 104A to 104F) is shaped in such a manner that the corner portions of the projection (104, 104A to 104F) are removed so that a projecting area of the projection along a direction of rotating the rotor (10) is small.

7.  The device as claimed in claim 6,
    wherein the projection (104C to 104F) surrounds part of the blow-out opening (103).

8.  The device as claimed in claim 6 or 7,
    wherein the inner wall surface (122) of the projection (104F) is shaped in a curve along which the cooling gas flows (102).

9.  The device as claimed in any one of claims 6 to 8,
    wherein a slope surface (200, 202) that enlarges the sectional area of the flow path of a blow-out cooling gas flow (101) is defined downstream of the blow-out opening (103).

10. The device as claimed in any one of claims 1 to 9,
    wherein the projection (4A, 104) is designed in such a manner that the cooling gas flow (102) collides therewith at a right angle.

11. The device as claimed in any one of claims 1 to 10,
    wherein a larger number of the projections (4A, 104) are disposed in a region which is estimated to be a hot spot (161) of the rotor (10) and in a region which is estimated to be a hot spot of the stator (20), in comparison with other regions.

# FIG. 1

# FIG. 2A

# FIG. 2B

# FIG. 2C

# FIG. 3

STATOR INNER PERIPHERAL SURFACE

$\frac{x}{L}$

ROTOR OUTER PERIPHERAL SURFACE

# FIG. 4

FLOW AMOUNT COEFFICIENT $\frac{Q}{Q_0}$

$\frac{H}{d}$

## FIG. 5A

## FIG. 5B

## FIG. 5C

# FIG. 6

FLOW AMOUNT COEFFICIENT $\frac{Q}{Q_0}$

SECOND EMBODIMENT

FIRST EMBODIMENT

$\frac{Hi}{d}, \frac{H}{d}$

# FIG. 7A

# FIG. 7B

# FIG. 8A

53

61

102

4D

52

5

11

# FIG. 8B

53  61  4D  21

H,Hi

2

102

11

51

5

d

# FIG. 8C

61  53

102

W, Wi

5

52

4D

# FIG. 9A

102
102
51
4A
5
200

# FIG. 9B

5   51   21
2
102
4A
11
200
5a

# FIG. 9C

51   102
200   5   4A

## FIG. IOA

## FIG. IOB

## FIG. IOC

# FIG. IIA

# FIG. IIB

FIG. 12A

FIG. 12B

FIG. 12C

# FIG. 13A

# FIG. 13B

# FIG. 14A

# FIG. 14B

# FIG. 15A

# FIG. 15B

# FIG. 16A

# FIG. 16B

EP 0 853 370 A1

# FIG. 17

# FIG. 18

# FIG. 19

# FIG. 20

# FIG. 21

# FIG. 22

EP 0 853 370 A1

# FIG. 23

# FIG. 24

# FIG. 25

# FIG. 26

# FIG. 27

# FIG. 28

# FIG. 29

# FIG. 30

# FIG. 31

# FIG. 32

# FIG. 33

# FIG. 34

# FIG. 35

101

103   200

104A   102

# FIG. 36

101

102

103   200

104B

# FIG. 37

# FIG. 38

# FIG. 39

# FIG. 40

# FIG. 41

# FIG. 42

# FIG. 43

102

104B

101

202

103

# FIG. 44

102

104 C

101

202

103

# FIG. 45

# FIG. 46

# F I G. 47

# FIG. 48A

# FIG. 48B

$$\frac{Va}{Vao}$$

ROTOR END PORTION — CENTER

ROTOR AXIAL POSITION

# FIG. 48C

$$\frac{\alpha}{\alpha_0}$$

ROTOR END PORTION — CENTER

ROTOR AXIAL POSITION

# FIG. 49A

# FIG. 49B

# FIG. 49C

# F IG. 50

# FIG. 51A

# FIG. 51B

# FIG. 52

DESIGN TEMPERATURE

ROTOR COIL TEMPERATURE

162

163

# FIG. 53

# FIG. 54

# FIG. 55

# FIG. 56

# FIG. 57

# FIG. 58

# FIG. 59

# FIG. 60

# FIG. 61

# FIG. 62

# FIG. 63

**European Patent Office**

# EUROPEAN SEARCH REPORT

Application Number

## DOCUMENTS CONSIDERED TO BE RELEVANT

EP 97122336.7

| Category | Citation of document with indication, where appropriate, of relevant passages | Relevant to claim | CLASSIFICATION OF THE APPLICATION (Int. Cl. 6) |
|---|---|---|---|
| Y | US 4496863 A (SAWATANI) 29 January 1985 (29.01.85), column 2, line 64 - column 3, line 5, claims 1-4. | 1-5, 10,11 | H 02 K 9/02 H 02 K 9/04 |
| A | | 6-9 | |
| Y | Soviet Inventions Illustrated, Section R, week C07, London: Derwent Publications Ltd.; & SU 664-259 A (GLAVENERGOREMONT). | 1-5, 10,11 | |
| A | & SU 664-259 A fig. 1-6. | 6-9 | |
| Y | CH 180501 A (PUNGA) 19 January 1936 (19.01.36), page 4, left column, line 15 - right column, line 12, claim 1. | 1-4, 10,11 | |
| | | | TECHNICAL FIELDS SEARCHED (Int. Cl.6) |
| A | | 6,7,9 | H 02 K |
| Y | Soviet Inventions Illustrated, Section R, week B11, London, Derwent Publications Ltd.; & SU 604-085 A (OBUKHOV). | 1-4, 10,11 | |
| A | & SU 604-085 A fig. 1,2. | 6,7,9 | |
| A | US 4365177 A (MADSEN) 21 December 1982 (21.12.82), claims 1,4-8. | 6,7,9 | |
| A | US 4313058 A (AVRUKH) 26 January 1982 | 6,7,9 | |

The present search report has been drawn up for all claims

| Place of search | Date of completion of the search | Examiner |
|---|---|---|
| VIENNA | 26-03-1998 | HAWEL |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

## EUROPEAN SEARCH REPORT

European Patent Office

Application Number

EP 97122336.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| | (26.01.82), claims 1-3,6-9. ---- | | |

TECHNICAL FIELDS SEARCHED (Int. Cl. 6)

The present search report has been drawn up for all claims

| Place of search | Date of completion of the search | Examiner |
|---|---|---|
| VIENNA | 26-03-1998 | HAWEL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)